(19) Europäisches Patentamt
European Patent Office
Office européen des brevets

(11) **EP 4 550 908 A1**

(12) **EUROPEAN PATENT APPLICATION**
published in accordance with Art. 153(4) EPC

(43) Date of publication:
**07.05.2025 Bulletin 2025/19**

(21) Application number: **22948653.5**

(22) Date of filing: **01.07.2022**

(51) International Patent Classification (IPC):
*H04W 72/04* (2023.01)    *H04W 72/12* (2023.01)
*H04L 5/00* (2006.01)

(52) Cooperative Patent Classification (CPC):
Y02D 30/70

(86) International application number:
**PCT/CN2022/103204**

(87) International publication number:
**WO 2024/000551 (04.01.2024 Gazette 2024/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.
Beijing 100085 (CN)**

(72) Inventor: **ZHU, Yajun
Beijing 100085 (CN)**

(74) Representative: **Dehns Germany Partnerschaft
mbB
Theresienstraße 6-8
80333 München (DE)**

(54) **RESOURCE DETERMINATION METHOD AND APPARATUS, MULTI-CARRIER SCHEDULING METHOD AND APPARATUS, AND STORAGE MEDIUM**

(57)    Provided in the present disclosure are a resource determination method and apparatus, a multi-carrier scheduling method and apparatus, and a storage medium. The resource determination method comprises: receiving downlink control information (DCI), which is sent by means of a base station, wherein the DCI is used for scheduling data transmission of a plurality of cells; determining a resource allocation type of a first cell, wherein the first cell is any one of the plurality of cells; and determining a frequency-domain resource for data transmission of the first cell at least on the basis of the resource allocation type of the first cell and a frequency-domain resource allocation (FDRA) domain indication value in the DCI. According to the present disclosure, DCI bit overheads can be reduced on the basis of guaranteeing the flexibility of DCI scheduling, thereby effectively avoiding the problem of the DCI transmission efficiency being reduced, and achieving high availability.

```
┌─────────────────────────────────────────────┐
│ Receive downlink control information (DCI),   │
│ which is sent by means of a base station,     │── 201
│ wherein the DCI is used for scheduling data   │
│ transmission of a plurality of cells          │
└─────────────────────────────────────────────┘
                      │
                      ▼
┌─────────────────────────────────────────────┐
│ Determine a resource allocation type of a     │── 202
│ first cell                                    │
└─────────────────────────────────────────────┘
                      │
                      ▼
┌─────────────────────────────────────────────┐
│ Determine a frequency-domain resource for     │
│ data transmission of the first cell at least  │
│ on the basis of the resource allocation type  │── 203
│ of the first cell and a frequency-domain      │
│ resource allocation (FDRA) domain indication  │
│ value in the DCI                              │
└─────────────────────────────────────────────┘
```

**FIG. 2**

EP 4 550 908 A1

**Description**

**TECHNICAL FIELD**

The present disclosure relates to the field of communications, and in particular, to a resource determination method and apparatus, a multi-carrier scheduling method and apparatus, and a storage medium.

**BACKGROUND**

The 5th Generation Mobile Communication Technology (5G) New Radio (NR) technology works in a relatively wide spectrum range. With the re-farming of the frequency domain band corresponding to the existing cellular network, the utilization of the corresponding spectrum will steadily increase. However, for frequency range 1 (FR1), the available frequency domain resources are gradually fragmented. In order to meet different spectrum needs, these dispersed spectrum resources need to be utilized with higher spectrum, higher power efficiency and a more flexible way to achieve higher network throughput and good coverage.

Based on the relevant mechanism, one piece of downlink control information (DCI) in the existing serving cell only allows scheduling data of one cell. With the gradual fragmentation of the frequency resources, the demand for scheduling data of a plurality of cells simultaneously will gradually increase. Therefore, DCI for scheduling data of a plurality of cells needs to be introduced.

In the Release-18 (Rel-18) scenario, a single DCI can schedule 3 or more cells simultaneously. If the frequency domain resource allocation (FDRA) field in the DCI is simply expanded based on the method in the related art, the number of bits occupied by the FDRA field will be significantly increased, the DCI bit overhead will be increased, and the DCI transmission resources will be reduced.

**SUMMARY**

In order to overcome the problems existing in the related art, embodiments of the present disclosure provide a resource determination method and apparatus, a multi-carrier scheduling method and apparatus, and a storage medium.

According to a first aspect of the embodiments of the present disclosure, there is provided a resource determination method, the method is executed by a terminal, and includes:

receiving downlink control information (DCI) sent by a base station; where the DCI is used to schedule data transmission of a plurality of cells;

determining a resource allocation type of a first cell; where the first cell is any one of the plurality of cells;

determining a resource block group (RBG) granularity of the first cell; where the RBG granularity of the first cell is determined based on three or more candidate RBG granularities corresponding to a number of RBs occupied by a bandwidth part (BWP) configured for the first cell, or, determined based on a sum or average of a number of RBs occupied by BWPs configured for the plurality of cells; and determining a frequency domain resource for data transmission of the first cell based on the RBG granularity of the first cell, the resource allocation type of the first cell, and an indication value of a frequency domain resource allocation (FDRA) field in the DCI. Optionally, the RBG granularity of the first cell is determined based on a first corresponding relationship among a first RB number range, candidate configuration identifiers, and the candidate RBG granularities; where the first RB number range is an RB number range to which the number of RBs occupied by the bandwidth part (BWP) configured for the first cell belongs; in the first corresponding relationship, the first RB number range corresponds to three or more candidate configuration identifiers, and each of the candidate configuration identifiers corresponds to one of the candidate RBG granularities.

Optionally, the RBG granularities of the plurality of cells are the same, and the RBG granularities of the plurality of cells are determined based on a second corresponding relationship among a second RB number range, candidate configuration identifiers, and the candidate RBG granularities; where the second RB number range is an RB number range to which the sum or average of the numbers of RBs occupied by the BWPs configured for the plurality of cells belongs.

Optionally, in the second corresponding relationship, the second RB number range corresponds to two or more candidate configuration identifiers, and each of the candidate configuration identifiers is used to determine one of the candidate RBG granularities.

According to a second aspect of the embodiments of the present disclosure, there is provided a resource determination method, the method is executed by a terminal, and includes:

receiving downlink control information (DCI) sent by a base station; where the DCI is used to schedule data transmission of a plurality of cells;

determining a resource allocation type of a first cell; where the first cell is any one of the plurality of cells; and determining a frequency domain resource for data transmission of the first cell based on the resource allocation type of the first cell and an indication value of a frequency domain resource allocation (FDRA) field in the DCI; where the resource allocation types of the plurality of cells are the same. Optionally, the resource allocation types of the plurality of cells are a first type, and RBG indexes of data transmission of the plurality of cells is determined based on a first reference cell; where the first type indicates a frequency domain resource for data transmission of the cell through a bitmap, and the first reference cell is a cell different from the first cell among the plurality of cells;

the FDRA field is used to indicate:

an RBG index of data transmission of the first reference cell.

Optionally, the DCI includes a plurality of FDRA fields, and a number of the plurality of FDRA fields is equal to a number of cells in the plurality of cells;

in a case that the resource allocation types of the plurality of cells are a first type, an i-th FDRA field is used to indicate: an RBG index of data transmission of an i-th scheduled cell among the plurality of cells, where i is a positive integer less than or equal to the number of cells; where the first type indicates a frequency domain resource for data transmission of the cell through a bitmap.

Optionally, a designated bit in each of the FDRA fields is used to indicate a set to which an available RBG index value of data transmission of the cell belongs.

Optionally, in a case that a most significant bit (MSB) is not occupied, the designated bit is the MSB;

in a case that the MSB is occupied, the designated bit is any of:

one bit located after the MSB and adjacent to the MSB;

a least significant bit (LSB).

According to a third aspect of the embodiments of the present disclosure, there is provided a resource determination method, the method is executed by a terminal, and includes:

receiving downlink control information (DCI) sent by a base station; where the DCI is used to schedule data transmission of a plurality of cells;

determining a resource allocation type of a first cell; where the first cell is any one of the plurality of cells; and determining a frequency domain resource for data transmission of the first cell based on the resource allocation type of the first cell and an indication value of a frequency domain resource allocation (FDRA) field in the DCI; where the FDRA field includes a plurality of bit intervals, and a number of the plurality of bit intervals is equal to a number of resource allocation types;

where an $j$-th bit interval is used to indicate:

a frequency domain resource for data transmission of a cell corresponding to an $j$-th resource allocation type, where j is a positive integer less than or equal to the number of the resource allocation types.

Optionally, determining the frequency domain resource for data transmission of the first cell based on the resource allocation type of the first cell and the indication value of the frequency domain resource allocation (FDRA) field in the DCI, includes:

determining a first bit interval corresponding to the first cell based on the resource allocation type of the first cell; and determining the frequency domain resource for data transmission of the first cell based on an indication value of the first bit interval.

Optionally, the first bit interval is further used to indicate a frequency domain resource for data transmission of a second reference cell, and the frequency domain resource for data transmission of the first cell is determined based on the second reference cell; where the second reference cell is a cell different from the first cell among cells whose resource allocation types are the same as the resource allocation type corresponding to the first bit interval.

According to a fourth aspect of the embodiments of the present disclosure, there is provided a multi-carrier scheduling method, the method is executed by a base station and includes:

determining a frequency domain resource of each of a plurality of cells that need to be scheduled by downlink control information (DCI); where the DCI is used to schedule data transmission of the plurality of cells;

determining a resource allocation type for data transmission of each of the plurality of cells;

determining a resource block group (RBG) granularity of each of the plurality of cells; where the RBG granularity of each of the plurality of cells is determined based on three or more candidate RBG granularities corresponding to a number of RBs occupied by a bandwidth part (BWP) configured for each of the plurality of cells, or, determined based on a sum or average of the numbers of RBs occupied by the BWPs configured for the plurality of cells;

determining a bit value of a frequency domain resource allocation (FDRA) field in the DCI based on the resource allocation type of each of the plurality of cells, the RBG granularity of each of the plurality of cells, and the frequency domain resource corresponding to each of the plurality of cells; and

sending the DCI to a terminal.

Optionally, the RBG granularity of the first cell is determined based on a first corresponding relationship among a first RB number range, candidate configuration identifiers, and candidate RBG granularities; where the first cell is any one of the plurality of cells, and the first RB number range is an RB number range to which a number of RBs occupied by the bandwidth part (BWP) configured for the first cell belongs;

in the first corresponding relationship, the first RB number range corresponds to three or more candidate configuration identifiers, and each of the candidate configuration identifiers corresponds to one of the candidate RBG granularities.

Optionally, the RBG granularities of the plurality of cells are the same, and the RBG granularities of the plurality of cells are determined based on a second corresponding relationship among a second RB number range, a candidate configuration identifier, and a candidate RBG granularity; where the second RB number range is an RB number range to which the sum or average of the numbers of RBs occupied by the BWPs configured for the plurality of cells belongs.

Optionally, in the second corresponding relationship, the second RB number range corresponds to two or more candidate configuration identifiers, and each of the candidate configuration identifiers is used to determine one of the candidate RBG granularities.

According to a fifth aspect of the embodiments of the present disclosure, there is provided a multi-carrier scheduling method, the method is executed by a base station and includes:

determining a frequency domain resource of each of a plurality of cells that need to be scheduled by downlink control information (DCI); where the DCI is used to schedule data transmission of the plurality of cells;

determining a resource allocation type for data transmission of each of the plurality of cells;

determining a bit value of a frequency domain resource allocation (FDRA) field in the DCI based on the resource allocation type of each cell and the frequency domain resource corresponding to each of the plurality of cells; where the resource allocation types of the plurality of cells are the same; and

sending the DCI to a terminal. Optionally, the resource allocation types of the plurality of cells are a first type, and RBG indexes of data transmission of the plurality of cells are determined based on a first reference cell; where the first type indicates a frequency domain resource for data transmission of the cell through a bitmap, and the first reference cell is a cell different from the first cell among the plurality of cells;

where the FDRA field is used to indicate:

an RBG index of data transmission of the first reference cell.

Optionally, the DCI includes a plurality of FDRA fields, and a number of the plurality of FDRA fields is equal to a number of cells in the plurality of cells;

where an i-th FDRA field is used to indicate:

an RBG index of data transmission of an i-th scheduled cell among the plurality of cells, i is a positive integer less than or equal to the number of cells.

Optionally, in a case that the resource allocation types of the plurality of cells are the first type, a designated bit in each of the FDRA fields is used to indicate a set to which an available RBG index value of data transmission of the cell belongs; where the first type indicates the frequency domain resource for data transmission of the cell through a bitmap.

Optionally, in a case that a most significant bit (MSB) is not occupied, the designated bit is the MSB;

in a case that the MSB is occupied, the designated bit is any of: one bit located after the MSB and adjacent to the MSB; a least significant bit (LSB).

According to a sixth aspect of the embodiments of the present disclosure, there is provided a multi-carrier scheduling method, the method is executed by a base station and includes:

determining a frequency domain resource of each of a plurality of cells that need to be scheduled by downlink control information (DCI); where the DCI is used to schedule data transmission of the plurality of cells;

determining a resource allocation type for data transmission of each of the plurality of cells;

determining a bit value of a frequency domain resource allocation (FDRA) field in the DCI based on the resource allocation type of each of the plurality of cells and the frequency domain resource corresponding to each of the plurality of cells; where the FDRA field includes a plurality of bit intervals, and a number of the plurality of bit intervals is equal to a number of resource allocation types; where an $j$-th bit interval is used to indicate: a frequency domain resource for data transmission of a cell corresponding to an $j$-th resource allocation type, where $j$ is a positive integer less than or equal to the number of the resource allocation types; and

sending the DCI to a terminal.

Optionally, determining the bit value of the frequency domain resource allocation (FDRA) field in the DCI based on the resource allocation type of each of the plurality of cells and the frequency domain resource corresponding to each of the plurality of cells, includes:

determining a first bit interval corresponding to a first cell based on the resource allocation type of the first cell; where the first cell is any one of the plurality of cells;

determining a bit value of the first bit interval based on the frequency domain resource for data transmission of the first cell.

Optionally, the first bit interval is further used to indicate a frequency domain resource for data transmission of a second reference cell, and the frequency domain resource for data transmission of the first cell is determined based on the reference cell; where the second reference cell is a cell different from the first cell among cells whose resource allocation types are the same as the resource allocation type corresponding to the first bit interval.

According to a seventh aspect of the embodiments of the present disclosure, there is provided a resource determination apparatus, the apparatus is applied to a terminal and includes:

a first receiving module, configured to receive downlink control information (DCI) sent by a base station; where the DCI is used to schedule data transmission of a plurality of cells;

a first determination module, configured to determine a resource allocation type of a first cell; where the first cell is any one of the plurality of cells;

a second determination module, configured to determine a resource block group (RBG) granularity of the first cell; where the RBG granularity of the first cell is determined based on three or more candidate RBG granularities corresponding to a number of RBs occupied by a bandwidth part (BWP) configured for the first cell, or, determined based on a sum or average of the numbers of RBs occupied by BWPs configured for the plurality of cells; and

a third determination module, configured to determine a frequency domain resource for data transmission of the first cell based on the resource allocation type of the first cell and the indication value of the frequency domain resource allocation (FDRA) field in the DCI.

According to an eighth aspect of the embodiments of the present disclosure, there is provided a resource determination apparatus, the apparatus is applied to a terminal and includes:

a second receiving module, configured to receive downlink control information (DCI) sent by a base station; where the DCI is used to schedule data transmission of a plurality of cells;

a fourth determination module, configured to determine a resource allocation type of a first cell; where the first cell is any one of the plurality of cells; and

a fifth determination module, configured to determine a frequency domain resource for data transmission of the first cell based on the resource allocation type of the first cell and an indication value of a frequency domain resource allocation (FDRA) field in the DCI; where the resource allocation types of the plurality of cells are the same. According to a ninth aspect of the embodiments of the present disclosure, there is provided a resource determination apparatus, the apparatus is applied to a terminal and includes:

a third receiving module, configured to receive downlink control information (DCI) sent by a base station; where the DCI is used to schedule data transmission of a plurality of cells;

a sixth determination module, configured to determine a resource allocation type of a first cell; where the first cell is any one of the plurality of cells; and

a seventh determination module, configured to determine a frequency domain resource for data transmission of the first cell based on the resource allocation type of the first cell and an indication value of a frequency domain resource allocation (FDRA) field in the DCI; where the FDRA field includes a plurality of bit intervals, and a number of the plurality of bit intervals is equal to a number of resource allocation types;

where an $j$-th bit interval is used to indicate:

a frequency domain resource for data transmission of a cell corresponding to an $j$-th resource allocation type, where $j$ is a positive integer less than or equal to the number of the resource allocation types.

According to a tenth aspect of the embodiments of the present disclosure, there is provided a multi-carrier scheduling apparatus, the apparatus is applied to a base station and includes:

an eighth determination module, configured to determine a frequency domain resource of each of a plurality of cells that need to be scheduled by downlink control information (DCI); where the DCI is used to schedule data transmission of the plurality of cells;
a ninth determination module, configured to determine a resource allocation type for data transmission of each of the plurality of cells;
a tenth determination module, configured to determine a resource block group (RBG) granularity of each of the plurality of cells; where the RBG granularity of each of the plurality of cells is determined based on three or more candidate RBG granularities corresponding to a number of RBs occupied by a bandwidth part (BWP) configured for each of the plurality of cells, or, determined based on a sum or average of the numbers of RBs occupied by the BWPs configured for the plurality of cells;
an eleventh determination module, configured to determine a bit value of a frequency domain resource allocation (FDRA) field in the DCI based on the resource allocation type of each of the plurality of cells, the RBG granularity of each cell, and the frequency domain resource corresponding to each of the plurality of cells; and
a first sending module, configured to send the DCI to a terminal.

According to an eleventh aspect of the embodiments of the present disclosure, there is provided a multi-carrier scheduling apparatus, the apparatus is applied to a base station and includes:

a twelfth determination module, configured to determine a frequency domain resource of each of a plurality of cells that need to be scheduled by downlink control information (DCI); where the DCI is used to schedule data transmission of the plurality of cells;
a thirteenth determination module, configured to determine a resource allocation type for data transmission of each of the plurality of cells;
a fourteenth determination module, configured to determine a bit value of a frequency domain resource allocation (FDRA) field in the DCI based on the resource allocation type of each of the plurality of cells and the frequency domain resources corresponding to each of the plurality of cells; where the resource allocation types of the plurality of cells are the same; and
a second sending module, configured to send the DCI to a terminal.

According to a twelfth aspect of the embodiments of the present disclosure, there is provided a multi-carrier scheduling apparatus, the apparatus is applied to a base station and includes:

a fifteenth determination module, configured to determine a frequency domain resource of each of a plurality of cells that need to be scheduled by downlink control information (DCI); where the DCI is used to schedule data transmission of the plurality of cells;
a sixteenth determination module, configured to determine a resource allocation type for data transmission of each of the plurality of cells;
a seventeenth determination module, configured to determine a bit value of a frequency domain resource allocation (FDRA) field in the DCI based on the resource allocation type of each of the plurality of cells and the frequency domain resource corresponding to each of the plurality of cells; where the FDRA field includes a plurality of bit intervals, and a number of the plurality of bit intervals is equal to a number of resource allocation types; where an $j$-th bit interval is used to indicate: a frequency domain resource for data transmission of a cell corresponding to an $j$-th resource allocation type, where $j$ is a positive integer less than or equal to the number of resource allocation types; and
a third sending module, configured to send the DCI to a terminal.

According to a thirteenth aspect of the embodiments of the present disclosure, there is provided a computer-readable storage medium, the storage medium stores a computer program, and the computer program is used to execute any one of the above resource determination methods described above.
According to a fourteenth aspect of the embodiments of the present disclosure, there is provided a computer-readable storage medium, the storage medium stores a computer program, and the computer program is used to execute any of the above multi-carrier scheduling methods.
According to a fifteenth aspect of the embodiments of the present disclosure, there is provided a resource determination apparatus, including:

a processor; and

a memory configured to store instructions executable by the processor;

where the processor is configured to execute any one of the above resource determination methods.

According to a sixteenth aspect of the embodiments of the present disclosure, there is provided a multi-carrier scheduling apparatus, including:

a processor; and

a memory used to store instructions executable by the processor;

where the processor is configured to execute any of the above multi-carrier scheduling methods.

The technical solutions provided by the embodiments of the present disclosure may include the following beneficial effects.

In the embodiments of the present disclosure, the terminal may receive the DCI sent by the base station for scheduling data transmission of a plurality of cells, and determine the frequency domain resource for data transmission of the first cell based on at least the resource allocation type of the first cell and the indication value of the FDRA field in the DCI. The present disclosure can, on the basis of ensuring DCI scheduling flexibility, reduce DCI bit overhead, effectively avoid the problem of reduced DCI transmission efficiency, and achieve high availability.

It should be understood that the above general description and the following detailed description are only exemplary and explanatory, and do not limit the embodiments of the present disclosure.

## BRIEF DESCRIPTION OF THE DRAWINGS

The accompanying drawings, which are incorporated in and constitute a part of this specification, illustrate the embodiments consistent with the present disclosure, and together with the specification, serve to explain the principles of the embodiments of the present disclosure.

FIG. 1A is a schematic diagram illustrating a single DCI scheduling PDSCH of a plurality of cells according to an exemplary embodiment.

FIG. 1B is a schematic diagram of RBG indexes for data transmission in the FDRA field under the resource allocation type of type0 according to an exemplary embodiment.

FIG. 1C is a schematic diagram of a frequency domain resource for data transmission in the FDRA field under the resource allocation type of type 1 according to an exemplary embodiment.

FIG. 2 is a schematic flowchart of a resource determination method according to an exemplary embodiment.

FIG. 3 is a schematic flowchart of another resource determination method according to an exemplary embodiment.

FIG. 4 is a schematic flowchart of a multi-carrier scheduling method according to an exemplary embodiment.

FIG. 5 is a schematic flowchart of another multi-carrier scheduling method according to an exemplary embodiment.

FIG. 6 is a schematic diagram of a structure of an FDRA field of an mc DCI according to an exemplary embodiment.

FIG. 7A is a block diagram of a resource determination apparatus according to an exemplary embodiment.

FIG. 7B is a block diagram of another resource determination apparatus according to an exemplary embodiment.

FIG. 7C is a block diagram of another resource determining apparatus according to an exemplary embodiment.

FIG. 8A is a block diagram of a multi-carrier scheduling apparatus according to an exemplary embodiment.

FIG. 8B is a block diagram of another multi-carrier scheduling apparatus according to an exemplary embodiment.

FIG. 8C is a block diagram of another multi-carrier scheduling apparatus according to an exemplary embodiment.

FIG. 9 is a schematic structural diagram of a resource determination apparatus according to an exemplary embodiment of the present disclosure.

FIG. 10 is a schematic structural diagram of a multi-carrier scheduling apparatus according to an exemplary embodiment of the present disclosure.

## DETAILED DESCRIPTION

Exemplary embodiments will be described in detail herein, examples of which are illustrated in the accompanying drawings. When the following description refers to the drawings, the same numbers in different drawings refer to the same or similar elements unless otherwise indicated. The implementations described in the following exemplary embodiments do not represent all implementations consistent with the embodiments of the present disclosure. Rather, they are merely examples of apparatuses and methods consistent with some aspects of the embodiments of the present disclosure as detailed in the appended claims.

The terms used in the present disclosure are for the purpose of describing specific embodiments only and are not intended to limit the present disclosure. As used in the present disclosure and the appended claims, the singular forms "a/an," "said" and "the" are intended to include the plural forms as well, unless the context clearly dictates otherwise. It should also be understood that the term "and/or" as used herein refers to and includes any or all possible combinations of at least one of the associated listed items.

It should be understood that although the terms first, second, third, etc. may be used to describe various information in the present disclosure, the information should not be limited to these terms. These terms are only used to distinguish information of the same type from each other. For example, without departing from the scope of the present disclosure, the first information may also be called second information, and similarly, the second information may also be called first information. Depending on the context, the word "if" as used herein may be interpreted as "when" or "upon" or "in response to determining."

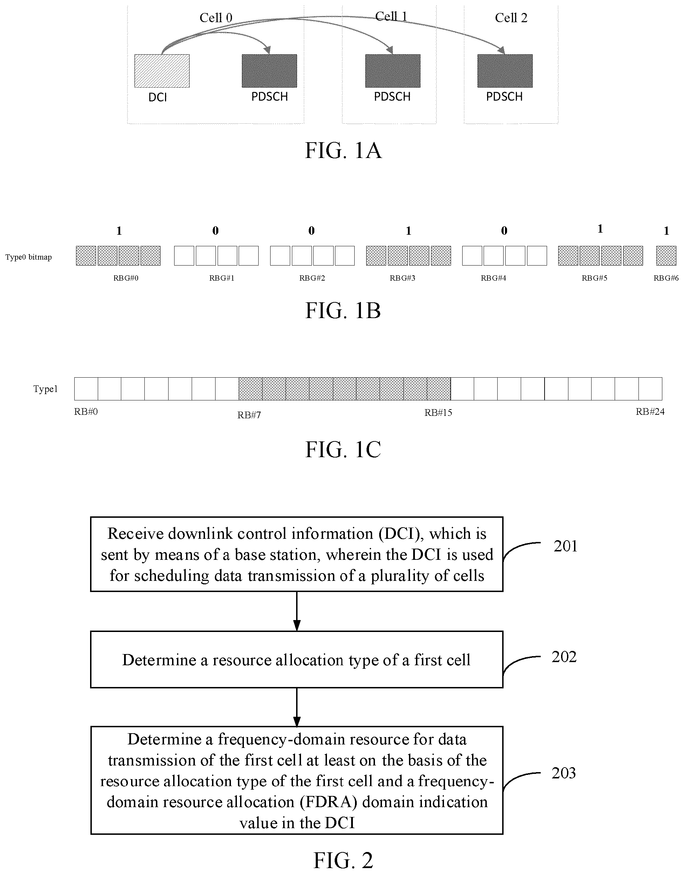

Based on the relevant mechanism, one DCI in the scheduling cell is only allowed to schedule the data transmission of one cell, that is, only the physical uplink shared channel (PUSCH) or physical downlink shared channel (PDSCH) of one cell is allowed to be scheduled. With the gradual fragmentation of frequency resources, the need to schedule data of a plurality of cells simultaneously gradually increases. At the same time, in order to reduce control signaling overhead, Rel-18 WID supports a single DCI to schedule PDSCHs or PUSCHs of a plurality of cells. It should be noted that each cell corresponds to one PDSCH and one PUSCH. Scheduling the PDSCHs of three cells through one DCI may be shown in FIG. 1A, for example.

In a scenario where a single DCI schedules data transmission of a plurality of cells, how to reduce DCI overhead as much as possible while ensuring scheduling flexibility is an urgent problem to be solved. The FDRA field is used to indicate the frequency domain resource of data transmission of the cell. It is proposed in the Rel-17 scenario design of single DCI scheduling two cell that the DCI FDRA field can be simply expanded, that is, the frequency domain information of scheduling data of two cells is indicated based on different bits.

In the Rel-18 scenario, a single DCI can schedule three or more cells simultaneously. If the FDRA field is simply extended based on the above method, the number of bits occupied by the FDRA field will be significantly increased and the DCI bits overhead will be increased. For example, a single DCI schedules three cells and the number of RBs occupied by BWP configured for each cell is 100, if the FDRA field corresponding to the three cells is based on resource type 1, the number of bits occupied by the corresponding FDRA field is 39, which greatly increases the DCI overhead and reduces DCI transmission resources.

In the related mechanisms, there are three types of the FDRA field resource allocation configured based on Radio Resource Control (RRC) signaling: type 0, type 1, and dynamic.

Among them, type 0 refers to indicating the resource block group (RBG) corresponding to transmission of the PDSCH or PUSCH within a range of the Bandwidth Part (BWP) through a bitmap. The RBG consists of P consecutive RBs. The size of P is related to the BWP size and RBG configuration. The BWP size may be determined by the number of RBs occupied by the BWP. For example, the corresponding relationship may be shown in Table 1.

Table 1

| BWP size | Configuration 1 | Configuration 2 |
|----------|-----------------|-----------------|
| 1-36 | 2 | 4 |
| 37-72 | 4 | 8 |
| 73-144 | 8 | 16 |
| 145-275 | 16 | 16 |

In type 0, assuming that BWP size is 25, and the configuration identifier is 2, then P is 4. Assuming that the indication value of the FDRA field is: 1001011, then the RBG indexes corresponding to the data transmission of the indicated cell are shown in FIG. 1B, which are RBG#0, RBG#3, RBG#5, and RBG#6 respectively.

Among them, type 1 determines the frequency domain resources for the PDSCH or PUSCH transmission in the BWP by the start position plus the continuous length, and the frequency domain resources are continuously distributed in the frequency domain.

Referring to FIG. 1C, assuming that the BWP size is 25, the start RB index of the frequency domain resource for data transmission of the cell determined in type 1 is RB#7, and the continuous length is 9, then RB#7 to RB#15 can be used as the frequency domain resource for data transmission.

Under the condition that the FDRA field resource allocation type configured by the RRC signaling is dynamic, the terminal can dynamically switch between the resource allocation type of type 0 and the resource allocation type of type 1 based on the indication of the Most Significant Bit (MSB) of the FDRA field.

If the MSB indication is 0, the corresponding FDRA field is of the resource allocation type of type 0. If the MSB indication is 1, the corresponding FDRA field is of the resource allocation type of type 1. The length of the FDRA field in DCI is determined according to the resource allocation manner that occupies the longer FDRA field in the two resource allocation manners.

It should be understood that the RB mentioned in the present disclosure may refer to a physical resource block (PRB), a virtual resource block (VRB), or a collective name for PRB and VRB, which is not limited in the present disclosure.

With respect to the DCI for scheduling a plurality of cells, simple expansion of the FDRA field will greatly increase the DCI bits overhead and reduce DCI transmission efficiency.

In order to solve the above technical problems, the present disclosure provides a resource determination method and apparatus, a multi-carrier scheduling method and apparatus, and a storage medium. On the basis of ensuring the flexibility of DCI scheduling, the DCI bit overhead is reduced, the problem of reduced DCI transmission efficiency is effectively avoided, and high availability is achieved.

The resource determination method provided by the present disclosure is first introduced from the terminal side.

An embodiment of the present disclosure provides a resource determination method. Referring to FIG. 2, which is a flowchart of a resource determination method according to an embodiment, the method may be executed by a terminal and the method may include the following steps.

In step 201, downlink control information (DCI) sent by a base station is received; where the DCI is used to schedule data transmission of a plurality of cells.

In the embodiments of the present disclosure, the DCI for scheduling data transmission of a plurality of cells may include, but is not limited to, scheduling PDSCH of a plurality of cells and/or PUSCH of a plurality of cells. Each cell corresponds to one PDSCH and/or each cell corresponds to one PUSCH.

In step 202, a resource allocation type of a first cell is determined.

In the embodiments of the present disclosure, the first cell may be any one of the plurality of cells. The resource allocation type of the first cell may be determined through the RRC signaling sent by the base station. The resource allocation type of the first cell may be type 0, type 1 or dynamic.

In step 203, a frequency domain resource for data transmission of the first cell is determined based on at least the resource allocation type of the first cell and an indication value of a frequency domain resource allocation (FDRA) field in the DCI.

In the above embodiment, on the basis of ensuring the flexibility of DCI scheduling, the DCI bit overhead can be reduced effectively, the problem of reduced DCI transmission efficiency can be efficiently avoided, and high availability can be achieved.

In some optional embodiments, in a scenario where a plurality of cells are scheduled through DCI, the terminal may jointly determine the frequency domain resource for data transmission of the first cell based on the RBG granularity of the first cell, the resource allocation type of the first cell, and the indication value of the FDRA field. The first cell may be any one of the plurality of cells scheduled by DCI.

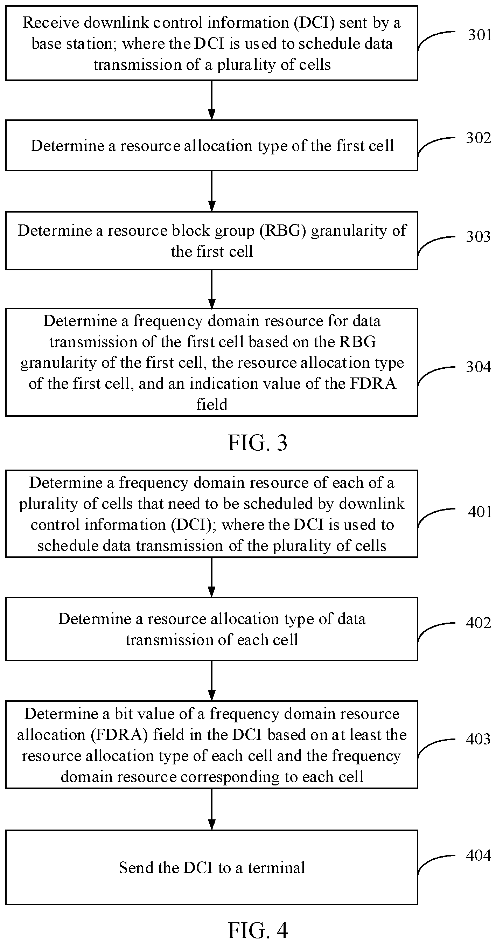

Referring to FIG. 3, which is a flowchart of a resource determination method according to an embodiment, the method may be executed by a terminal, and the method may include the following steps.

In step 301, downlink control information (DCI) sent by a base station is received; where the DCI is used to schedule data transmission of a plurality of cells.

In the embodiments of the present disclosure, the DCI for scheduling data transmission of a plurality of cells may include, but is not limited to, scheduling PDSCH of a plurality of cells and/or PUSCH of a plurality of cells. Each cell corresponds to one PDSCH and/or each cell corresponds to one PUSCH.

In step 302, a resource allocation type of the first cell is determined.

In the embodiments of the present disclosure, the first cell may be any one of the plurality of cells. The resource allocation type of the first cell may be determined through the RRC signaling sent by the base station. The resource allocation type of the first cell may be type 0, type 1 or dynamic.

In step 303, a resource block group (RBG) granularity of the first cell is determined.

In the embodiments of the present disclosure, the RBG granularity P of the first cell can be determined according to the BWP size and a configuration identifier indicated by the RRC signaling sent by the base station.

In the embodiments of the present disclosure, the execution order of step 302 and step 303 is not limited.

In step 304, a frequency domain resource for data transmission of the first cell is determined based on the RBG granularity of the first cell, the resource allocation type of the first cell, and an indication value of the FDRA field.

In the above embodiment, the frequency domain resource for data transmission of the first cell may be determined in combination with the RBG granularity of the first cell, the resource allocation type of the first cell and the indication value of the FDRA field. On the basis of ensuring the flexibility of DCI scheduling, the DCI bit overhead is reduced, the problem of reduced DCI transmission efficiency is effectively avoided, and high availability is achieved.

Regarding the above step 303, in a possible implementation, the RBG granularity of the first cell may be determined based on a first corresponding relationship among a first RB number range, candidate configuration identifiers, and candidate RBG granularities.

The first RB number range is an RB number range to which the number of RBs occupied by the bandwidth part (BWP) configured for the first cell belongs.

In the first corresponding relationship, the first RB number range corresponds to three or more candidate configuration identifiers, and each of the candidate configuration identifiers corresponds to one of the candidate RBG granularities.

That is, the present disclosure can expand the corresponding relationship provided in Table 1, and at least add configuration of configuration 3, for example, as shown in Table 2.

Table 2

| BWP size | Configuration 1 | Configuration 2 | Configuration 3 | ... |
|----------|-----------------|-----------------|-----------------|-----|
| 1-36 | 2 | 4 | $P_{31}$ | ... |
| 37-72 | 4 | 8 | $P_{32}$ | ... |
| 73-144 | 8 | 16 | $P_{33}$ | ... |
| 145-275 | 16 | 16 | $P_{34}$ | ... |

Among them, the candidate RBG granularity corresponding to configuration 3 may be greater than or equal to the candidate RBG granularity corresponding to configuration 2. That is, $P_{31}$ may be greater than or equal to 4, $P_{32}$ may be greater than or equal to 8, and so on. If Table 2 also includes configuration 4, the candidate RBG granularity corresponding to configuration 4 may be greater than or equal to the candidate RBG granularity corresponding to configuration 3.

The terminal can determine the first RB number range based on the number of RBs occupied by the BWP configured for the first cell, and then jointly determine the RBG granularity P of the first cell based on the first RB number range and the candidate configuration identifier indicated by the base station via RRC signaling through the corresponding relationship in Table 2.

In another possible implementation, the RBG granularities of a plurality of cells are the same. On this basis, the RBG granularity of the plurality of cells is determined based on the corresponding relationship among a second RB number range, the candidate configuration identifier, and the candidate RBG granularities.

The second RB number range is an RB number range to which a sum or average of the numbers of RBs occupied by the BWPs configured for the plurality of cells belongs.

For example, the number of RBs occupied by the BWPs configured for three cells are 25, 37, and 76 respectively, and the average is 46. It is assumed that the average belongs to the RB number range 2 and the candidate configuration identifier is 1, based on the second corresponding relationship, it can be determined that the RBG granularities of the three cells are equal, and are all $P_{12}$. It is assumed that the value of $P_{12}$ is 4, then the RBG granularities of these three cells are all 4.

Optionally, in the second corresponding relationship, the second RB number range corresponds to three or more candidate configuration identifiers, and each of the candidate configuration identifiers is used to determine one of the candidate RBG granularities, as shown in Table 3.

Table 3

| Second RB number range | Configuration 1 | Configuration 2 | Configuration 3 | ... |
|------------------------|-----------------|-----------------|-----------------|-----|
| RB number range 1 | $P_{11}$ | $P_{21}$ | $P_{31}$ | ... |
| RB number range 2 | $P_{12}$ | $P_{22}$ | $P_{32}$ | ... |
| RB number range 3 | $P_{13}$ | $P_{23}$ | $P_{33}$ | ... |
| RB number range 4 | $P_{14}$ | $P_{24}$ | $P_{34}$ | ... |

In Table 3, the second RB number range is the RB number range to which the sum or average of the numbers of RBs occupied by the BWPs configured for the plurality of cells belongs.

It should be noted that if the second RB number range is the RB number range to which the average of RBs occupied by the BWPs configured for a plurality of cells belongs, for example, the second RB number range (represented by the average BWP size) in Table 3 may be the same as the value range corresponding to BWP size in Table 2. Correspondingly, the RBG granularities corresponding to configuration 1, configuration 2, configuration 3, etc. in Table 3 may also be the same as the RBG granularities corresponding to configuration 1, configuration 2, configuration 3, etc. in Table 2.

Optionally, in the second corresponding relationship, the second RB number range corresponds to two or more candidate configuration identifiers, and each of the candidate configuration identifiers is used to determine one of the candidate RBG granularities, as shown in Table 4.

Table 4

| Second RB number range | Configuration 1 | Configuration 2 |
|---|---|---|
| RB number range 1 | $P_{11}$ | $P_{21}$ |
| RB number range 2 | $P_{12}$ | $P_{22}$ |
| RB number range 3 | P13 | P23 |
| RB number range 4 | P14 | P24 |

Similarly, if the second RB number range is the RB number range to which the average of RBs occupied by the BWPs configured for a plurality of cells belongs, for example, the second RB number range (expressed by the average BWP size) in Table 4 may be the same as the value range corresponding to the BWP size in Table 2. Correspondingly, the RBG granularities corresponding to configuration 1 and configuration 2 in Table 4 may also be the same as the RBG granularities corresponding to configuration 1 and configuration 2 in Table 2.

The terminal may determine the RBG granularity P of the first cell based on the second RB number range and the candidate configuration identifier indicated by the base station through RRC signaling based on Table 3 or Table 4.

In the above embodiment, any of the above methods may be used to determine the RBG granularity of the first cell, so that the frequency domain resource for data transmission of the first cell may be determined subsequently based on the RBG granularity of the first cell, the resource allocation type of the first cell and the indication value of the FDRA field. It is easy to be implemented and has high usability.

Correspondingly, for the above step 304, the process of determining the frequency domain resource for data transmission of the first cell based on the RBG granularity of the first cell, the resource allocation type of the first cell and the indication value of the FDRA field, includes the following steps.

First, based on the BWP size of the first cell, that is, the number of RBs occupied by the bandwidth part (BWP) configured for the first cell, and the RBG granularity of the first cell determined in the above manner, the terminal determines the RB range occupied by each RBG of the BWP configured for the first cell.

For the first cell i, after determining the RBG granularity P, the corresponding number of RBGs and each RBG size are determined based on the relevant mechanism. The specific formula is as follows:

$$N_{RBG} = \left\lceil \left( N_{BWP,i}^{size} + \left( N_{BWP,i}^{strat} \bmod P \right) \right) / P \right\rceil$$

where the size of the first RBG is $RBG_0^{size}$, $RBG_0^{size} = P - N_{BWP,i}^{strat} \bmod P$ ;

if $\left( N_{BWP,i}^{strat} + N_{BWP,i}^{size} \right) \bmod P > 0$ , then the size of the last RBG is $RBG_{last}^{size} = \left( N_{BWP,i}^{strat} + N_{BWP,i}^{size} \right) \bmod P$ , otherwise, the size of the last RBG is P;

the sizes of other RBGs are all *P*.

$N_{BWP,i}^{size}$ and $N_{BWP,i}^{start}$ are the continuous RB number of the configured BWP and the start RB position of BWP of the first cell i, respectively.

For example, the RBG granularity is 4 and the BWP size is 25. Based on the above solution, there are totally 7 RBGs in the first cell. RBG#0 includes RB#0 to RB#3, RBG#1 includes RB#4 to RB#7, RBG#2 includes RB#8 to RB#11, RBG#3 includes RB#12 to RB#15, RBG#4 includes RB#16 to RB#19, RBG#5 includes RB#20 to RB#23, and RBG# 6 only includes RB#24.

Further, the terminal determines the frequency domain resource for data transmission of the first cell based on the resource allocation type of the first cell and the indication value of the FDRA field.

If the resource allocation type of the first cell is type 0, the FDRA field indicates the frequency domain resource for data transmission of the first cell in a bitmap manner, and the terminal can determine the RBG indexes for data transmission of the first cell based on the indication value of the FDRA field.

If the resource allocation type of the first cell is type1, the FDRA field can indicate the frequency domain resource of the first cell through the resource indication value (RIV), where RIV is associated with the start RBG index and the RBG continuous number for data transmission. The terminal can determine the start RBG index and the RBG continuous number for data transmission of the first cell based on the indication value of the FDRA field.

If the resource allocation type of the first cell is dynamic, the terminal can determine the resource allocation type of the first cell to be type0 or type1 based on the MSB of the FDRA field, and then determine the frequency domain resource for data transmission of the first cell in the above manner.

In the above embodiment, the RBG granularity of the first cell may be determined based on the above-mentioned first corresponding relationship or second corresponding relationship. In the first corresponding relationship, the first RB number range corresponds to three or more candidate configuration identifiers. When the configuration identifier is large, the corresponding RBG granularity may be large, thereby increasing the number of RBs included in each RBG. When indicating the frequency domain resource for data transmission of the cell through the FDRA field, the bits included in the FDRA field can be effectively reduced. In the second corresponding relationship, the second RB number range of the RBG granularity is determined to be the RB number range to which the sum or average of the numbers of RBs occupied by the BWPs configured for the plurality of cells belongs, which can also reduce the number of bits included in the FDRA field. On the basis of ensuring the flexibility of DCI scheduling, the DCI bit overhead is reduced, the problem of reduced DCI transmission efficiency is effectively avoided, and high availability is achieved.

In some optional embodiments, in a scenario where DCI schedules a plurality of cells, the resource allocation types of the plurality of cells scheduled by DCI may be limited to be the same. On this basis, the FDRA field may indicate in the following manners.

In the first manner, the FDRA field adopts the manner of joint indication.

In a possible implementation, the resource allocation types of the plurality of cells are all of the first type, and the RBG indexes of data transmission of the plurality of cells may be determined based on a first reference cell.

The first type indicates the frequency domain resource for data transmission of the cell through a bitmap, that is, the first type is type0. The first reference cell is a cell different from the first cell among the plurality of cells.

The first reference cell may be indicated by the base station through signaling, or the first reference cell may be determined through a protocol.

In a possible implementation, a cell that receives DCI among a plurality of cells may be used as the first reference cell.

In another possible implementation, the cell with the largest number of RBs occupied by the BWP configured in a plurality of cells may be used as the first reference cell.

In another possible implementation, the cell with the smallest number of RBs occupied by the BWP configured in a plurality of cells may be used as the first reference cell.

In another possible implementation, the cell with the largest corresponding cell index number among the plurality of cells may be used as the first reference cell.

In another possible implementation, the cell with the smallest corresponding cell index number among the plurality of cells may be used as the first reference cell.

The above is only an illustrative description, and any manner of determining the first reference cell among a plurality of cells in actual applications should fall within the protection scope of the present disclosure.

Correspondingly, the FDRA field is used to indicate: the RBG index of data transmission of the first reference cell.

At this time, the terminal may determine the frequency domain resource for data transmission of the first cell based on the resource allocation type of the first cell and the indication value of the frequency domain resource allocation (FDRA) field in the DCI.

Specifically, if the RBG index value indicated by the FDRA field is less than or equal to the maximum RBG index value determined by the BWP configured for the first cell, the terminal may determine that the RBG index of data transmission of the first cell is the same as the first reference cell.

If the RBG index value indicated by the FDRA field is greater than the maximum RBG index value determined by the BWP configured for the first cell, the terminal may determine that the RBG index of the first cell is the maximum RBG index value of the first cell. For example, the bitmap indicated by the FDRA field is: 1001011, the length is 6, and the maximum length of the RBG bitmap of the first cell is 7. Then the terminal determines that the RBG index of data transmission of the first cell is the same as that of the reference cell, which are RBG#0, RBG#3, RBG#5, RBG#6.

For another example, the bitmap indicated by the FDRA field is: 1001011, the length is 6, and the length of the RBG bitmap of the first cell is 5, specifically: 100101. Then, it is determined that the RBG index of data transmission of the first cell is RBG#0, RBG#3, RBG#5.

In another possible implementation, the resource allocation types of the plurality of cells are the second type, and the frequency domain resource for data transmission of the plurality of cells may be determined based on the first reference cell.

The second type may refer to type 1, and the FDRA field may be used to indicate the RIV of the first reference cell.

In the embodiments of the present disclosure, the RIV of the first cell may be determined based on the RIV of the first reference cell.

Specifically, if the RIV of the first reference cell is less than or equal to the maximum RIV determined by the BWP configured for the first cell, then it is determined that the RIV of the first cell is equal to the RIV of the first reference cell. According to the RIV of the first cell, in accordance with the related art, the start RBG index and the number of continuous RBGs for data transmission of the first cell may be determined.

If the RIV of the first reference cell is greater than the maximum RIV determined by the BWP configured for the first cell, it can be determined that the RIV of the first cell is equal to a preset RIV. Specifically, the preset RIV may be the maximum RIV of the first cell. Further, the terminal may determine the start RBG index and the number of continuous RBGs for data transmission in the first cell according to the RIV of the first cell in accordance with the related art.

In another possible implementation, the resource allocation types of a plurality of cells are a third type, that is, dynamic type. The terminal may first determine that the resource allocation type is type 0 or type 1 based on the MSB of the FDRA field, and then further determine the frequency domain resource for data transmission of the first cell in the above manner.

In the second manner, the FDRA field adopts the manner of separate indications.

In the embodiments of the present disclosure, the DCI may include a plurality of FDRA fields, and the number of the plurality of FDRA fields is equal to the number of cells of the plurality of cells.

For example, if the number of cells scheduled by the DCI is $n$, then the DCI may include $n$ FDRA fields, where $n$ is a positive integer greater than 1.

In a possible implementation, the resource allocation types of a plurality of cells are all the first type. The first type indicates the frequency domain resource for data transmission of the cell through a bitmap. That is, the first type is type0. The i-th FDRA field in the DCI is used to indicate:

an RBG index of data transmission of the i-th scheduled cell among the plurality of cells, where i is a positive integer less than or equal to the number of cells.

The terminal may determine the FDRA field corresponding to the first cell in the DCI, and determine the RBG index for data transmission of the first cell based on the indication value of the FDRA field corresponding to the first cell. It should be noted that the RBG index indicated by each FDRA field may be one or more, which is not limited by the present disclosure.

In another possible implementation, the resource allocation types of a plurality of cells are all type 0, and the $i$-th FDRA field in the DCI is used to indicate:

the RBG index of data transmission of the $i$-th scheduled cell among the plurality of cells, where $i$ is a positive integer less than or equal to the number of cells.

In addition, the designated bit in each FDRA field is used to indicate a set to which the available RBG index value for data transmission of the cell belongs.

In a possible implementation, the available RBG index value for data transmission of the cell can only be an odd number or an even number.

The terminal can determine whether the available RBG index value for data transmission of the corresponding scheduled cell is an odd number or an even number through the designated bit of each FDRA field.

For example, if the bit value of the designated bit in the FDRA field corresponding to the first cell is 1, the terminal determines that the available RBG index value for data transmission of the first cell is an odd number; if the bit value of the designated bit in the FDRA field corresponding to the first cell is 0, the terminal determines that the available RBG index value for data transmission of the first cell is an even number, and vice versa.

By reducing the available RBG index value for data transmission of the scheduled cell, the bit value of the FDRA field is further reduced.

In the embodiments of the present disclosure, if the MSB in the FDRA field is not occupied, that is, in the case that the terminal determines that the resource allocation types of a plurality of cells are type 0 through the RRC signaling sent by the base station, the designated bit is the MSB, that is, the MSB of each FDRA field in the DCI is used to indicate whether the available RBG index value for data transmission of the cell is an even number or an odd number.

If the MSB in the FDRA field is occupied, that is, in the case that the terminal determines that the resource allocation types of a plurality of cells are dynamic through the RRC signaling sent by the base station, the terminal determines that the resource allocation type of the first cell is type0 based on the MSB in the FDRA field corresponding to the first cell. At this time, the MSB is occupied, the designated bit may be a bit located after the MSB and adjacent to the MSB, or the designated bit may be the least significant bit (LSB).

In another possible implementation, the resource allocation types of a plurality of cells are all the second type, that is, type 1, and the i-th FDRA field in the DCI is used to indicate:

the RIV of data transmission of the i-th scheduled cell among the plurality of cells, where i is a positive integer less than or equal to the number of cells.

The terminal may determine the FDRA field corresponding to the first cell in the DCI, and determine the RIV of the first cell based on the indication value of the FDRA field corresponding to the first cell, thereby determining the start RBG index and the number of continuous RBGs for data transmission of the first cell.

In another possible implementation, the resource allocation types of a plurality of cells are the third type, that is, dynamic. The MSB of the FDRA field of the DCI is used to indicate that the resource allocation types of the plurality of cells are all type0 or type1.

After determining the resource allocation types of a plurality of cells, the terminal determines the frequency domain resource for data transmission of the first cell in the above manner.

In the above embodiment, in a case that the DCI is used to schedule data transmission of a plurality of cells, the resource allocation types of the plurality of cells can be limited to be the same, and then the frequency domain resource for data transmission of the first cell is determined in the above manner. On the basis of ensuring flexibility of DCI scheduling, the DCI bit overhead is reduced, the problem of reduced DCI transmission efficiency is effectively avoided, and high availability is achieved.

In some optional embodiments, in a scenario where DCI schedules a plurality of cells, the resource allocation types of the plurality of scheduled cells may not be limited to the same. In this case, the FDRA field may adopt a manner of partial joint indication.

The FDRA field includes a plurality of bit intervals, and the number of the plurality of bit intervals is equal to the number of resource allocation types.

For example, if the number of the resource allocation types is *m,* the number of the bit intervals is also *m.*

In a possible implementation, the number of resource allocation types is 4, including type0, type1, dynamic+type0, and dynamic+type1. It should be noted that dynamic+type0 means that the base station indicates that the resource allocation type of the cell is dynamic through RRC signaling, and further indicates that the resource allocation type of the cell is type0 through the MSB in the FDRA field. dynamic+type1 means that the base station indicates that the resource allocation type of the cell is dynamic through RRC signaling, and further indicates that the resource allocation type of the cell is type1 through the MSB in the FDRA field.

In the embodiments of the present disclosure, the *j*-th bit interval of DCI is used to indicate:

the frequency domain resource for data transmission of the cell corresponding to the *j*-th resource allocation type, where *j* is a positive integer less than or equal to the number of the resource allocation types.

The terminal may determine a first bit interval of the FDRA field corresponding to the first cell based on the resource allocation type of the first cell. Further, based on the indication value of the first bit interval, the frequency domain resource for data transmission of the first cell is determined.

Optionally, if at least one cell has the same resource allocation manner as the first cell, then the first bit interval is also used to indicate the frequency domain resource for data transmission of a second reference cell, and the frequency domain resource for data transmission of the first cell is determined based on the second reference cell. The second reference cell is a cell different from the first cell among cells whose resource allocation types are the same as the resource allocation type corresponding to the first bit interval.

The manner in which the terminal determines the frequency domain resource for data transmission of the first cell is the same as the above-mentioned manner in which the FDRA field is used to indicate the frequency domain resource for data transmission of the reference cell and the terminal determines the frequency domain resource of the first cell based on the frequency domain resource corresponding to the reference cell, which is not elaborated here.

In the above embodiment, on the basis of ensuring the flexibility of DCI scheduling, the DCI bit overhead can also be reduced, the problem of reduced DCI transmission efficiency can be effectively avoided, and high availability can be achieved.

Next, the multi-carrier scheduling method provided by the present disclosure will be introduced from the base station side.

An embodiment of the present disclosure provides a multi-carrier scheduling method. Referring to FIG. 4, which is a flowchart of a multi-carrier scheduling method according to an embodiment, the method can be executed by a base station, and the method can include the following steps.

In step 401, a frequency domain resource of each of a plurality of cells that need to be scheduled by downlink control information (DCI) is determined; where the DCI is used to schedule data transmission of the plurality of cells.

In the embodiments of the present disclosure, DCI for scheduling data transmission of a plurality of cells may include, but is not limited to, scheduling PDSCH of a plurality of cells and/or PUSCH of a plurality of cells. Each cell corresponds to one PDSCH and/or each cell corresponds to one PUSCH.

In step 402, a resource allocation type of data transmission of each cell is determined.

In the embodiments of the present disclosure, the resource allocation type of each cell can be determined through RRC signaling sent by the base station, and the resource allocation type of the first cell can be type 0, type 1 or dynamic.

In step 403, a bit value of a frequency domain resource allocation (FDRA) field in the DCI is determined based on at least the resource allocation type of each cell and the frequency domain resource corresponding to each cell.

In step 404, the DCI is sent to the terminal.

In the above embodiment, on the basis of ensuring the flexibility of DCI scheduling, the DCI bit overhead can be

EP 4 550 908 A1

reduced, the problem of reduced DCI transmission efficiency can be effectively avoided, and high availability can be achieved.

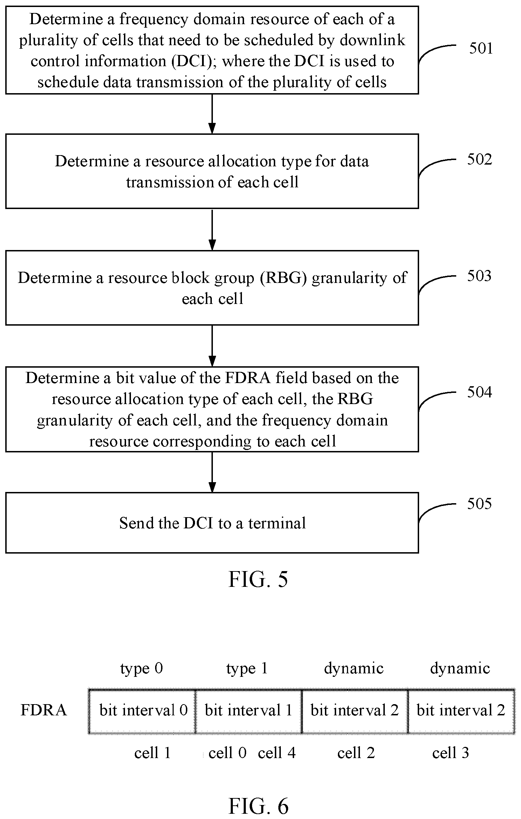

In some optional embodiments, referring to FIG. 5, which is a flowchart of a multi-carrier scheduling method according to an embodiment, the method can be executed by a base station, and the method can include the following steps.

In step 501, a frequency domain resource of each of a plurality of cells that need to be scheduled by downlink control information (DCI) is determined; where the DCI is used to schedule data transmission of the plurality of cells.

In the embodiments of the present disclosure, DCI used to schedule data transmission of a plurality of cells may include, but is not limited to, scheduling PDSCH of a plurality of cells and/or PUSCH of a plurality of cells. Each cell corresponds to one PDSCH and/or each cell corresponds to one PUSCH.

In step 502, a resource allocation type for data transmission of each cell is determined.

In the embodiments of the present disclosure, the resource allocation type of each cell can be determined through RRC signaling sent by the base station, and the resource allocation type of the first cell can be type 0, type 1 or dynamic.

In step 503, a resource block group (RBG) granularity of each cell is determined.

In the embodiments of the present disclosure, the RBG granularity P of each cell can be determined according to a BWP size and a configuration identifier indicated by the RRC signaling sent by the base station.

In the embodiments of the present disclosure, the execution order of step 502 and step 503 is not limited.

In step 504, a bit value of the FDRA field is determined based on the resource allocation type of each cell, the RBG granularity of each cell, and the frequency domain resource corresponding to each cell.

In step 505, the DCI is sent to the terminal.

In the above embodiment, the bit value of the FDRA field may be determined by combining the resource allocation type of each cell, the RBG granularity of each cell, and the frequency domain resource corresponding to each cell. On the basis of ensuring the flexibility of DCI scheduling, the DCI bit overhead is reduced, the problem of reduced DCI transmission efficiency is effectively avoided, and high availability is achieved.

Regarding the above step 503, in a possible implementation, the RBG granularity of the first cell may be determined based on a first corresponding relationship among a first RB number range, candidate configuration identifiers, and candidate RBG granularities. The first cell is any one of a plurality of cells.

The first RB number range is an RB number range to which the number of RBs occupied by the bandwidth part (BWP) configured for the first cell belongs.

In the first corresponding relationship, the first RB number range corresponds to three or more candidate configuration identifiers, and each of the candidate configuration identifiers corresponds to one of the candidate RBG granularities.

That is, the present disclosure can extend the corresponding relationship provided in Table 1, and at least add configuration of configuration 3, for example, as shown in Table 2 above.

The terminal can determine the first RB number range based on the number of RBs occupied by the BWP configured for the first cell, and then jointly determine the RBG granularity P of the first cell according to the first RB number range and the candidate configuration identifier indicated by the base station via RRC signaling through the corresponding relationship in Table 2.

In another possible implementation, the RBG granularities of a plurality of cells are the same. On this basis, the RBG granularities of the plurality of cells are determined based on a second corresponding relationship among a second RB number range, the candidate configuration identifier, and the candidate RBG granularities.

The second RB number range is an RB number range to which the sum or average of the numbers of RBs occupied by the BWPs configured for the plurality of cells belongs.

For example, the number of RBs occupied by the BWPs configured for three cells are 25, 37, and 76 respectively, and the average is 46. It is assumed that they belong to the RB number range 2, and the candidate configuration identifier is 1, based on the second corresponding relationship, it may be determined that the RBG granularities of the three cells are equal and are all $P_{12}$. It is assumed that the value of $P_{12}$ is 4, then the RBG granularities of these three cells are all 4.

Optionally, in the second corresponding relationship, the second RB number range corresponds to three or more candidate configuration identifiers, and each of the candidate configuration identifiers is used to determine one of the candidate RBG granularities, such as shown in Table 3 above.

It should be noted that if the second RB number range is the RB number range to which the average of RBs occupied by the BWPs configured for a plurality of cells belongs, for example, the second RB number range (represented by the average BWP size) in Table 3 may be the same as the value range corresponding to the BWP size in Table 2. Correspondingly, the RBG granularities corresponding to configuration 1, configuration 2, configuration 3, etc. in Table 3 may also be the same as the RBG granularities corresponding to configuration 1, configuration 2, configuration 3, etc. in Table 2.

Optionally, in the second corresponding relationship, the second RB number range corresponds to two or more candidate configuration identifiers, and each of the candidate configuration identifiers is used to determine one of the candidate RBG granularities, such as shown in Table 4 above.

The terminal may determine the RBG granularity P of the first cell based on the second RB number range and the candidate configuration identifier indicated by the base station through RRC signaling and based on the above Table 3 or Table 4.

Similarly, if the second RB number range is the RB number range to which the average of the numbers of RBs occupied by the BWPs configured for a plurality of cells belongs, for example, the second RB number range (expressed by the average BWP size) in Table 4 may be the same as the value range corresponding to the BWP size in Table 2. Correspondingly, the RBG granularities corresponding to configuration 1 and configuration 2 in Table 4 may also be the same as the RBG granularities corresponding to configuration 1 and configuration 2 in Table 2.

In the above embodiments, any of the above manners can be used to determine the RBG granularity of the first cell, so that the bit value of the FDRA field can be jointly determined subsequently based on the RBG granularity of the first cell, the resource allocation type of the first cell, and the frequency domain resource for data transmission of the first cell, which is easy to implement and has high availability.

Correspondingly, for the above step 504, the base station may determine the bit value of the FDRA field based on the RBG granularity of the first cell, the resource allocation type of the first cell, and the frequency domain resource for data transmission of the first cell, At this time, the base station can expand the FDRA field in the DCI to indicate the frequency domain resource corresponding to each cell respectively.

If the resource allocation type of the first cell is type 0, for the bit interval corresponding to the first cell in the FDRA field, the bit value of this bit interval can be jointly determined based on the RBG granularity of the first cell and the RBG index of data transmission of the first cell.

For the first cell i, after determining the RBG granularity P, the corresponding number of RBGs and each RBG size are determined based on the relevant mechanism. The specific formula is as follows:

$$N_{RBG} = \left\lceil \left( N_{BWP,i}^{size} + \left( N_{BWP,i}^{strat} \bmod P \right) \right) / P \right\rceil.$$

The size of the first RBG is $RBG_0^{size}$, $RBG_0^{size} = P - N_{BWP,i}^{strat} \bmod P$ ;

if $\left( N_{BWP,i}^{strat} + N_{BWP,i}^{size} \right) \bmod P > 0$, then the size of the last RBG is $RBG_{last}^{size} = \left( N_{BWP,i}^{strat} + N_{BWP,i}^{size} \right) \bmod P$, otherwise, the size of the last RBG is P;

the sizes of other RBGs are all *P*.

$N_{BWP,i}^{size}$ and $N_{BWP,i}^{start}$ are the number of continuous RBs of the BWP and the BWP start RB position configured for the first cell i respectively.

If the resource allocation type of the first cell is type 1, the bit interval corresponding to the first cell in the FDRA field can determine the RIV of the first cell based on the RBG granularity of the first cell, the start RBG index value of data transmission of the first cell, and the number of continuous RBGs, and then determine the bit value of the bit interval based on the RIV of the first cell.

If the resource allocation type of the first cell is dynamic, the base station can indicate that the resource allocation type of the first cell is type 0 or type 1 through the MSB in the FDRA field according to the dynamically determined resource allocation type of the first cell, and the bit values of the other bits can be determined in the above manner and will not be described again here.

In the above embodiment, the base station may determine the bit value of the FDRA field based on the RBG granularity of the first cell, the resource allocation type of the first cell, and the frequency domain resource of data transmission of the first cell. The RBG granularity of the first cell may be determined based on the first corresponding relationship or the second corresponding relationship. On the basis of ensuring the flexibility of DCI scheduling, compared with the condition in which the data transmission of each cell is performed based on the granularity of RB when DCI schedules a plurality of cells, the DCI bit overhead is reduced, the problem of reduced DCI transmission efficiency is effectively avoided, and high availability is achieved.

In some optional embodiments, in a scenario where DCI schedules a plurality of cells, the resource allocation types of the plurality of cells scheduled by DCI may be limited to be the same. On this basis, the FDRA field can be indicated in the following manners:

In the first manner, the FDRA field adopts a manner of joint indication.

In a possible implementation, the resource allocation types of the plurality of cells are all the first type, and the RBG indexes of data transmission of the plurality of cells may be determined based on a first reference cell.

The first type indicates the frequency domain resource for data transmission of the cell through a bitmap, that is, the first type is type0. The first reference cell is a cell different from the first cell among the plurality of cells.

The first reference cell may be indicated by the base station through signaling, or the first reference cell may be determined through a protocol.

In a possible implementation, a cell that receives DCI among a plurality of cells may be used as the first reference cell.

In another possible implementation, the cell with the largest number of RBs occupied by the BWP configured in a plurality of cells may be used as the first reference cell.

In another possible implementation, the cell with the smallest number of RBs occupied by the BWP configured in a plurality of cells may be used as the first reference cell.

In another possible implementation, the cell with the largest corresponding cell index number among the plurality of cells may be used as the first reference cell.

In another possible implementation, the cell with the smallest corresponding cell index number among the plurality of cells may be used as the first reference cell.

The above is only an illustrative description, and any manner of determining the first reference cell among a plurality of cells in actual applications should fall within the protection scope of the present disclosure.

Correspondingly, the FDRA field is used to indicate: the RBG index of data transmission of the first reference cell.

The base station determines the frequency domain resource for data transmission of the first cell based on the resource allocation type of the first cell and the RBG index of data transmission of the first reference cell.

Specifically, if the RBG index value indicated by the FDRA field is less than or equal to the maximum RBG index value determined by the BWP configured for the first cell, the terminal may determine that the RBG index of the data transmission of the first cell is the same as the first reference cell.

If the RBG index value indicated by the FDRA field is greater than the maximum RBG index value determined by the BWP configured for the first cell, the terminal may determine that the RBG index of the first cell is the maximum RBG index value of the first cell. At this time, the terminal may determine the bit value of the frequency domain resource allocation (FDRA) field in the DCI based on the RBG index of the data transmission of the first reference cell.

In another possible implementation, the resource allocation types of the plurality of cells are the second type, and the frequency domain resource for data transmission of the plurality of cells may be determined based on the first reference cell.

The second type may refer to type 1, and the FDRA field may be used to indicate the RIV of the first reference cell.

In the embodiments of the present disclosure, the RIV of the first cell may be determined based on the RIV of the first reference cell.

Specifically, if the RIV of the first reference cell is less than or equal to the maximum RIV determined by the BWP configured for the first cell, then it is determined that the RIV of the first cell is equal to the RIV of the first reference cell. According to the RIV of the first cell, in accordance with the related art, the start RBG index and the number of continuous RBGs for data transmission of the first cell may be determined.

If the RIV of the first reference cell is greater than the maximum RIV determined by the BWP configured for the first cell, it may be determined that the RIV of the first cell is equal to a preset RIV. Specifically, the preset RIV may be the maximum RIV of the first cell.

At this time, the terminal may determine the bit value of the frequency domain resource allocation (FDRA) field in the DCI based on the RIV of the first reference cell.

In another possible implementation, the resource allocation types of a plurality of cells are a third type, that is, dynamic type. The terminal may first determine that the resource allocation type is type0 or type1 based on the MSB of the FDRA field, and then determine the bit value of the FDRA field in the above manner.

In the second manner, the FDRA field adopts a manner of separate indications.

In the embodiments of the present disclosure, the DCI may include a plurality of FDRA fields, and the number of the plurality of FDRA fields is equal to the number of cells of the plurality of cells.

In a possible implementation, the resource allocation types of a plurality of cells are all the first type. The first type indicates the frequency domain resource of data transmission of the cell through a bitmap, that is, the first type is type0, and the i-th FDRA field in the DCI is used to indicate: the RBG index of data transmission of the i-th scheduled cell among the plurality of cells, where i is a positive integer less than or equal to the number of cells.

The base station may determine the bit value of the i-th FDRA field in the DCI based on the RBG index of the data transmission of the i-th scheduled cell among the plurality of cells. It should be noted that the RBG index indicated by each FDRA field may be one or more, which is not limited by the present disclosure.

In another possible implementation, the resource allocation types of a plurality of cells are all type 0, and the i-th FDRA field in the DCI is used to indicate:

the RBG index of data transmission of the i-th scheduled cell among the plurality of cells, where i is a positive integer less than or equal to the number of cells.

In addition, the designated bit in each FDRA field is used to indicate a set to which the available RBG index values for data transmission of the cell belong.

In a possible implementation, the set to which available RBG index values for data transmission in the cell belong can only be an odd number, or can only be an even number.

The base station determines the bit value of the designated bit of each FDRA field based on whether the available RBG index value for data transmission of the scheduled cell is an odd number or an even number.

For example, if the base station determines that the available RBG index value for data transmission of the first cell is an odd number, the base station determines that the bit value of the designated bit in the FDRA field corresponding to the first cell is 1; if the available RBG index value for data transmission of the first cell is an even number, the base station determines that the bit value of the designated bit in the FDRA field corresponding to the first cell is 0, and vice versa.

By reducing the available RBG index value for data transmission of the scheduled cell, the bit value of the FDRA field is further reduced.

In the embodiments of the present disclosure, if the MSB in the FDRA field is not occupied, that is, in a case that the terminal determines that the resource allocation types of a plurality of cells are type 0 through the RRC signaling sent by the base station, the designated bit is the MSB, that is, the MSB of each FDRA field in the DCI is used to indicate whether the available RBG index value for data transmission of the cell is an even number or an odd number.

If the MSB in the FDRA field is occupied, that is, in a case that the terminal determines that the resource allocation types of a plurality of cells are dynamic through the RRC signaling sent by the base station, the base station determines the MSB in the FDRA field according to the resource allocation type of the first cell being type0, at this time, the MSB is occupied, and the designated bit may be one bit located after the MSB and adjacent to the MSB, or the designated bit may be the least significant bit (LSB).

In another possible implementation, the resource allocation types of a plurality of cells are all the second type, that is, type 1, and the i-th FDRA field in the DCI is used to indicate:

the RIV of data transmission of the i-th scheduled cell among the plurality of cells, where i is a positive integer less than or equal to the number of cells.

The base station may determine the FDRA field corresponding to the first cell in the DCI, and determine the bit value of the FDRA field corresponding to the first cell based on the RIV of the first cell.

In another possible implementation, the resource allocation types of a plurality of cells are the third type, that is, dynamic. The MSB of the FDRA field of the DCI is used to indicate that the resource allocation types of a plurality of cells are type0 or type1. The bit value(s) of other bit(s) is determined in a manner similar to the above manner and will not be described again here.

In the above embodiment, in a case that DCI is used to schedule data transmission of a plurality of cells, the resource allocation types of a plurality of cells may be defined to be the same, and then the bit value of the FDRA field is determined in the above manner. On the basis of ensuring the flexibility of DCI scheduling, the DCI bit overhead is reduced, the problem of reduced DCI transmission efficiency is effectively avoided, and high availability is achieved.

In some optional embodiments, in a scenario where DCI schedules a plurality of cells, the resource allocation types of the plurality of scheduled cells may not be defined to the same. In this case, the FDRA field may adopt a manner of partial joint indication.

The FDRA field includes a plurality of bit intervals, and the number of the plurality of bit intervals is equal to the number of the resource allocation types.

For example, if the number of the resource allocation types is $m$, the number of bit intervals is also $m$.

In a possible implementation, the number of the resource allocation types is 4, including type0, type1, dynamic+type0, and dynamic+type1. It should be noted that dynamic+type0 means that the base station indicates that the resource allocation type of the cell is dynamic through RRC signaling, and further indicates that the resource allocation type of the cell is type0 through the MSB in the FDRA field. dynamic+type1 means that the base station indicates that the resource allocation type of the cell is dynamic through RRC signaling, and further indicates that the resource allocation type of the cell is type1 through the MSB in the FDRA field.

In the embodiments of the present disclosure, the $j$-th bit interval of DCI is used to indicate:

the frequency domain resource for data transmission of the cell corresponding to the $j$-th resource allocation type, where $j$ is a positive integer less than or equal to the number of the resource allocation types.

The base station may determine the resource allocation type of the first cell, and then determine the first bit interval of the FDRA field corresponding to the first cell. The bit value of the first bit interval is determined according to the frequency domain resource for data transmission of the first cell.

Optionally, if at least one cell has the same resource allocation manner as the first cell, then the first bit interval is also used to indicate the frequency domain resource for data transmission of a second reference cell, and the frequency domain resource for data transmission of the first cell is determined based on the second reference cell. The second reference cell is a cell different from the first cell among cells whose resource allocation types are the same as the resource allocation type corresponding to the first bit interval.

In the above embodiment, the DCI bit overhead can also be reduced on the basis of ensuring the flexibility of DCI scheduling, the problem of reduced DCI transmission efficiency can be effectively avoided, and high availability can be achieved.

The above method is further illustrated below with examples.

In the first embodiment, it is assumed that the terminal is a Rel-18 and subsequent version terminal, and the terminal receives DCI for multi-cell scheduling, based on the indication information corresponding to the DCI, PDSCHs of a plurality of cells are received or PUSCHs of a plurality of cells are transmitted.

In this embodiment, it is considered that in a case that the frequency domain resource information of different scheduled cells indicated by the FDRA field of the DCI (multi-cell DCI, mc DCI) for scheduling a plurality of cells is based on type 0, type 1 or dynamic resource allocation manner, by defining the number of RBs contained in the RBG corresponding to mc DCI to be P, the mc DCI is enabled to indicate the frequency domain resource information of PDSCHs or PUSCHs of a plurality of scheduled cells. It is worth noting that based on RBG, mc DCI can implement scheduling of FDRA field through type 0 and type 1 with RBG as the granularity.

In a possible implementation, the RBGs corresponding to different scheduled cells are not exactly the same. On the basis of configuration 1 and configuration 2 defined in Table 1, the configuration of configuration 3 is added. The RBG granularity P corresponding to configuration 3 is greater than or equal to the granularity corresponding to configuration 2. For the scheduled cell i, the terminal determines P based on the BWP size configured for the scheduled cell i and a configuration option indicated by signaling. The configuration option is indicated by the configuration signaling of the scheduled cell i, such as RRC signaling, and the configuration can also be configured by the cell where mc DCI is received. One possible implementation is shown in Table 5:

table 5

| BWP size | Configuration 1 | Configuration 2 | Configuration 3 |
|----------|-----------------|-----------------|-----------------|
| 1-36 | 2 | 4 | 8 |
| 37-72 | 4 | 8 | 16 |
| 73-144 | 8 | 16 | 32(16) |
| 145-275 | 16 | 16 | 32(16) |

It is worth noting that under the condition that the BWP size configured for the scheduled cell *i* is greater than 72, if the configuration is configuration 3, the number of RBs occupied by the corresponding mc DCI RBG may be equal to 32 or 16.

In a possible implementation, the RBG granularities corresponding to different scheduled cells are the same, for example, they are all P. P corresponds to the BWP sizes and configurations configured for all scheduled cells simultaneously scheduled by mc DCI. One possible implementation is shown in Table 6:

Table 6

| BWP size average | Configuration 1 | Configuration 2 | Configuration 3 |
|------------------|-----------------|-----------------|-----------------|
| 1-36 | 2 | 4 | 8 |
| 37-72 | 4 | 8 | 16 |
| 73-144 | 8 | 16 | 32(16) |
| 145-275 | 16 | 16 | 32(16) |

The BWP size described in Table 6 is equal to the average of the BWP sizes configured for all scheduled cells scheduled by mc DCI simultaneously. In another possible implementation, it is also possible to define that the sum of the BWP sizes configured for all scheduled cells scheduled by mc DCI simultaneously is associated with P. The specific implementation is similar to Table 6, which is not elaborated in the present disclosure.

On the basis of configuration 1 and configuration 2 defined in Table 1, configuration 3 is added. The configuration options are configured by the cell where the mc DCI is received. The configuration options can also be configured separately through each scheduled cell, e.g., configured by RRC signaling. In this scenario, it is necessary to limit the configuration options of respective cells that are scheduled simultaneously to be the same. If the configurations of respective scheduled cells are different, the terminal determines the RBG granularity based on the configuration configured for the cell where the MC DCI is received and Table 6, or the terminal determines this as an error case and no longer processes it.

It is worth noting that under the condition that the average of BWP sizes configured for all simultaneously scheduled cells is greater than 72, if configuration is configuration 3, the number of RBs occupied by the corresponding mc DCI RBG may be equal to 32 or 16.

In a possible implementation, the RBG granularities corresponding to different scheduled cells are the same, for example, they are all P. P corresponds to the BWP sizes and configurations configured for all scheduled cells simultaneously scheduled by mc DCI. One possible implementation is shown in Table 7.

Table 7

| BWP size average | Configuration 1 | Configuration 2 |
|---|---|---|
| 1-36 | 2 | 4 |
| 37-72 | 4 | 8 |
| 73-144 | 8 | 16 |
| 145-275 | 16 | 16 |

The BWP size described in Table 7 is equal to the average of BWP sizes configured for all scheduled cells scheduled by mc DCI simultaneously. In another possible implementation, it is also possible to define that the sum of the BWP sizes configured for all scheduled cells scheduled by mc DCI simultaneously is associated with P. The specific implementation is associated with Table 1, which is not elaborated in the present disclosure.

The described configuration 1 and configuration 2 are based on the basis defined in Table 1. The configuration options are configured by the cell where the mc DCI is received. The configuration options may also be configured separately through each scheduled cell, for example, configured by RRC signaling. In this scenario, it is necessary to restrict the configuration options of respective cells that are scheduled simultaneously to be the same. If the configurations of respective scheduled cells are different, the terminal determines the RBG granularity based on the configuration configured for the cell where the mc DCI is received and Table 7, or the terminal determines this as an error case and no longer processes it.

Based on the above implementation, for the scheduled cell i, after determining the RBG granularity P, the corresponding number of RBGs and each RBG size are determined based on the relevant mechanism. The specific formula is as follows:

$$N_{RBG} = \left\lceil \left( N_{BWP,i}^{size} + \left( N_{BWP,i}^{strat} \bmod P \right) \right) / P \right\rceil$$

the size of the first RBG is $RBG_0^{size}$, $RBG_0^{size} = P - N_{BWP,i}^{strat} \bmod P$;

if $\left( N_{BWP,i}^{strat} + N_{BWP,i}^{size} \right) \bmod P > 0$, then the size of the last RBG is $RBG_{last}^{size} = \left( N_{BWP,i}^{strat} + N_{BWP,i}^{size} \right) \bmod P$, otherwise, the size of the last RBG is *P*;

the sizes of other RBGs are all *P*.

$N_{BWP,i}^{size}$ and $N_{BWP,i}^{start}$ are the number of continuous RBs of the BWP and the start RB position of the BWP configured for the scheduled cell *i* respectively.

For the scheduled cell *i*, after determining the RBG granularity P, the terminal may determine the frequency domain information for data transmission of the scheduled cell *i* based on the FDRA resource configuration type and mc DCI FDRA field indication information. If the terminal is based on the resource allocation type of type 1, and the frequency domain resource allocation uses RBG as the granularity, the corresponding relationship between the RIV indicated by the FDRA field and the corresponding frequency domain information is the same as the DCI format 1_2 of the existing mechanism, which will not be elaborated in the present disclosure.

If the terminal is based on the resource allocation type of type 1, whether the corresponding frequency domain resource allocation is based on the granularity of RB or the granularity of RBG can be determined based on a predefined manner. For example, if the number of cells scheduled simultaneously is less than or equal to *n,* the corresponding frequency domain resource allocation is based on the granularity of RB; if the number of cells scheduled simultaneously is greater than *n*, the corresponding frequency domain resource allocation is based on the granularity of RB; *n* may be determined by predefinition or signaling indication.

If the terminal is based on the resource allocation type of type 1, whether the corresponding frequency domain resource allocation is based on the granularity of RB or the granularity of RBG may also be determined based on signaling indication. For example, 1 bit is added to the FDRA field to indicate whether the granularity is RB or RBG.

For example, under the condition that the RRC signaling indicates that the resource allocation type is type 1, the above information is indicated in the MSB of the mc DCI FDRA field, the MSB bit value of 0 corresponds to using RB as the granularity, and the MSB bit value of 1 corresponds to using RBG as the granularity, and vice versa.

The design rule of this embodiment defines the RBG granularity in mc scenarios, which can effectively reduce FDRA signaling overhead, achieve consistent understanding of RBG granularity between the base station and the terminal, and improve the scheduling efficiency of MC DCI.

In the second embodiment, as described in the first embodiment, it is assumed that the terminal is a Rel-18 and subsequent version terminal, and the terminal receives DCI for multi-cell scheduling. Based on the indication information corresponding to the DCI, it receives PDSCHs of a plurality of cells or transmits PUSCHs of a plurality of cells.

This embodiment considers that the frequency domain resource information of different scheduled cells indicated by the FDRA field of multi-cell DCI may be based on type 0, type 1 and dynamic resource type scenarios, and by designing the corresponding FDRA field indication manner, scheduling of PDSCH/PUSCH of a plurality of cells by a single DCI can be achieved.

A possible implementation is to determine a first reference cell in the mc scheduling scenario. The first reference cell can be determined based on a signaling indication, for example, indicating the cell index value of the first reference cell. The reference cell can also be determined in a predefined manner. For example, the cell where mc DCI is received is the first reference cell, or among all cells scheduled simultaneously by mc DCI, the cell corresponding to the largest (smallest) number of RBs occupied by the configured BWP is the first reference cell, or, among all cells scheduled simultaneously by mc DCI, the cell corresponding to the smallest (largest) cell id is the first reference cell, which is not limited by the present disclosure.

One possible implementation is that for a plurality of cells scheduled by the same mc DCI, in order to reduce the DCI overhead of the mc FDRA field, and at the same time, in order to reduce the processing complexity of the terminal, the resource allocation types of the plurality of cells are restricted to be the same.

For a plurality of cells scheduled by the same mc DCI, if the FDRA field corresponding to the mc DCI adopts a manner of joint indication, the frequency domain resources corresponding to different cells are determined based on the first reference cell. The specific implementation is as follows.

The mc DCI FDRA field indicates the RIV (type 1) or RBG bitmap (type 0) of the reference cell. For other scheduled cells, if the indicated RIV (type 1) or RBG bitmap (type 0) is less than or equal to the maximum RIV value or the longest RBG bitmap (type 0) determined based on the number of BWPs configured for the current cell, the RIV (type 1) or RBG bitmap (type 0) corresponding to FDRA of other scheduled cells is the same as the reference cell; otherwise, the RIV (type 1) or RBG bitmap (type 0) corresponding to the FDRA of other scheduled cells is equal to the maximum RIV value or the longest RBG bitmap (type 0) determined based on the number of BWPs configured for the current cell.

For a plurality of scheduled cells scheduled by the same mc DCI, if the FDRA field corresponding to the mc DCI adopts the manner of separate indication, under the condition that the resource allocation type is type 0, only RBGs corresponding to RBG indexes with odd or even numbers can be scheduled.

For a plurality of scheduled cells scheduled by the same mc DCI, if the resource allocation type is dynamic, the MSB of the mc DCI FDRA field indicates one of the resource allocation manners of type 0 or type 1 for all scheduled cells.

In one possible implementation, if the terminal is based on the resource allocation type of type 0, the set to which the corresponding available RBG index value belongs is an odd set or an even set.

It can be determined in a predefined way or based on signaling indication. For example, the MSB of the mc DCI FDRA field indicates that the set to which the available RBG index value belongs is an odd set or an even set.

In a possible implementation, if the terminal is based on the resource allocation type of dynamic, and the MSB of the mc DCI FDRA field indicates that the resource allocation manner of all scheduled cells is type 0, then one bit after the MSB of the mc DCI FDRA field (or LSB) indicates whether the set to which the available RBG index values belong is an odd set or an even set. If the terminal is based on the resource allocation type of dynamic, and the MSB of the mc DCI FDRA field indicates that the resource allocation manner of all scheduled cells is type 1, then one bit after the MSB of the mc DCI FDRA field (or LSB) indicates that the granularity is one of RB and RBG.

This embodiment limits the resource allocation types corresponding to the FDRA field of different scheduled cells in the mc scheduling scenario to be the same, which can effectively reduce the multi-cell DCI bits overhead, and avoid the multi-cell DCI transmission code rate being too high to lose the DCI transmission performance and reduce the scheduling performance of the cell.

In the third embodiment, as described in the first embodiment, it is assumed that the terminal is a Rel-18 and subsequent version terminal, and the terminal receives DCI for multi-cell scheduling. Based on the indication information corresponding to the DCI, it receives PDSCHs of a plurality of cells or transmits PUSCHs of a plurality of cells.

This embodiment considers that the frequency domain resource information of different scheduled cells indicated by the FDRA field of multi-cell DCI may be based on the resource types of type0, type 1 and dynamic, and does not limit the frequency domain resource types of different scheduled cells to be the same. By designing the corresponding FDRA field indication manner using partial joint indication, a single DCI can be used to schedule PDSCH/PUSCH of multi-cell.

In one possible implementation, the FDRA field corresponding to mc DCI is composed of different bit intervals. The number of bit intervals is equal to 1, 2 or 3. The number of bit intervals is determined by the type of resource allocation type (type 0, type 1, dynamic) corresponding to the FDRA configured by all scheduled cells scheduled by mc DCI simultaneously. The resource allocation types corresponding to FDRA of different scheduled cells are configured by RRC signaling. The bit intervals correspond to different resource allocation types one by one. For example, the corresponding bit intervals can correspond according to the order of resource allocation manner type 0, type 1, and dynamic one by one. As shown in FIG. 6, the same bit interval indicates the frequency domain resource of one or more scheduled cells corresponding to the same resource allocation manner.

For the bit interval corresponding to type 0 or type 1, the frequency domain resources of one or more scheduled cells corresponding to the same resource allocation manner are indicated through joint indication. The number of bits occupied by the bit interval corresponding to type 0 or type 1 is determined by the resource allocation type and the configured BWP of the reference cell. The specific indication manner is as follows.

The bit corresponding to the specific bit interval indicates the RIV or RBG of a second reference cell. The frequency domain resources of other cells using the same resource allocation manner are determined based on the second reference cell. The specific determination manner is similar to the second embodiment, which is not elaborated in the present disclosure.

For the second reference cell, the cell corresponding to the largest (smallest) number of RBs occupied by the configured BWP among one or more cells corresponding to the same resource allocation manner may be the second reference cell, or the cell corresponding to the smallest (largest) cell id among one or more cells corresponding to the same resource allocation manner and scheduled simultaneously by mc DCI is the second reference cell, which is not limited in the present disclosure.

For the bit interval corresponding to dynamic, the frequency domain resources of one or more scheduled cells corresponding to the resource allocation manner of dynamic are indicated in a separate manner. The bit interval corresponding to dynamic corresponds to the frequency domain resources of one or more scheduled cells corresponding to the resource allocation manner of dynamic one by one. The one or more scheduled cells correspond one by one based on the order of cell index values from small to large or from large to small.

In the scenario where the resource allocation types corresponding to the FDRA fields of different scheduled cells are not limited to be the same in the mc scheduling scenario, this embodiment designs a manner of partial joint indication, which can effectively reduce the multi-cell DCI bits overhead and avoid multi-cell DCI transmission code rate to be too high to lose DCI transmission performance and reduce cell scheduling performance.

Corresponding to the foregoing application function implementation method embodiments, the present disclosure also provides an application function implementation apparatus embodiment.

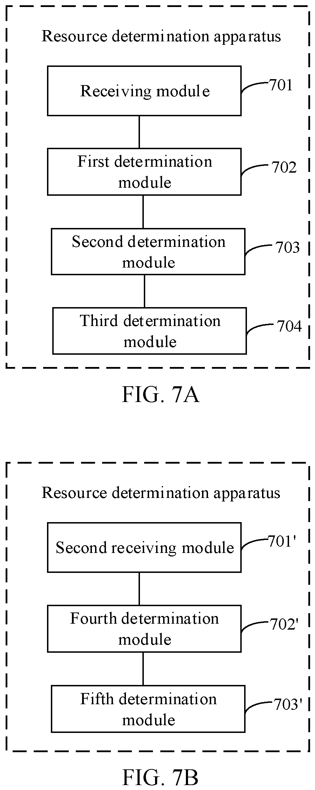

Referring to FIG. 7A, which is a block diagram of a resource determination apparatus according to an exemplary embodiment, the apparatus is applied to a terminal and includes:

a first receiving module 701, configured to receive downlink control information (DCI) sent by a base station; where the DCI is used to schedule data transmission of a plurality of cells;

a first determination module 702, configured to determine a resource allocation type of a first cell; where the first cell is any one of the plurality of cells;

a second determination module 703, configured to determine a resource block group (RBG) granularity of the first cell; where the RBG granularity of the first cell is determined based on three or more candidate RBG granularities corresponding to a number of RBs occupied by a bandwidth part (BWP) configured for the first cell, or, determined based on a sum or average of the numbers of RBs occupied by BWPs configured for the plurality of cells;

a third determination module 704, configured to determine a frequency domain resource for data transmission of the first cell based on the resource allocation type of the first cell, the RBG granularity of the first cell and an indication value of a frequency domain resource allocation (FDRA) field in the DCI.

Referring to FIG. 7B, which is a block diagram of a resource determination apparatus according to an exemplary embodiment, the apparatus is applied to a terminal and includes:

a second receiving module 701', configured to receive downlink control information (DCI) sent by a base station;

where the DCI is used to schedule data transmission of a plurality of cells;
a fourth determination module 702', configured to determine a resource allocation type of a first cell; where the first cell is any one of the plurality of cells;
a fifth determination module 703', configured to determine a frequency domain resource for data transmission of the first cell based on the resource allocation type of the first cell and an indication value of a frequency domain resource allocation (FDRA) field in the DCI; where the resource allocation types of the plurality of cells are the same.

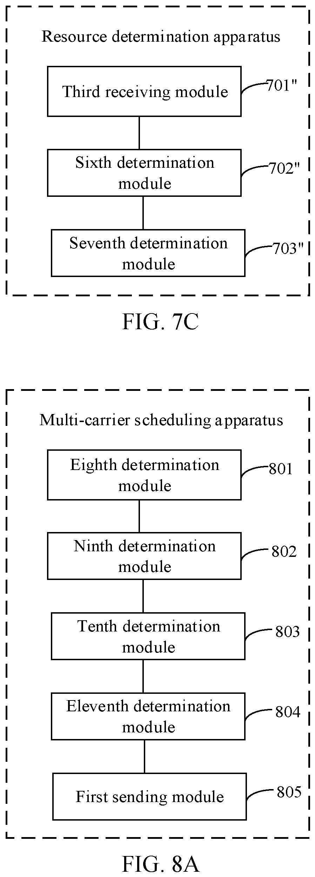

Referring to FIG. 7C, which is a block diagram of a resource determination apparatus according to an exemplary embodiment, the apparatus is applied to a terminal and includes:

a third receiving module 701", configured to receive downlink control information (DCI) sent by a base station; where the DCI is used to schedule data transmission of a plurality of cells;
a sixth determination module 702", configured to determine a resource allocation type of a first cell; wherein the first cell is any one of the plurality of cells;
a seventh determination module 703", configured to determine a frequency domain resource for data transmission of the first cell based on the resource allocation type of the first cell and an indication value of a frequency domain resource allocation (FDRA) field in the DCI; where the FDRA field includes a plurality of bit intervals, and a number of the plurality of bit intervals is equal to a number of resource allocation types;
where an $j$-th bit interval is used to indicate:
a frequency domain resource for data transmission of a cell corresponding to an $j$-th resource allocation type, where $j$ is a positive integer less than or equal to the number of the resource allocation types.

Referring to FIG. 8A, which is a block diagram of a multi-carrier scheduling apparatus according to an exemplary embodiment, the apparatus is applied to a base station and includes:

an eighth determination module 801, configured to determine a frequency domain resource of each of a plurality of cells that need to be scheduled by downlink control information (DCI); where the DCI is used to schedule data transmission of the plurality of cells;
a ninth determination module 802, configured to determine a resource allocation type of data transmission of each cell;
a tenth determination module 803, configured to determine a resource block group (RBG) granularity of each cell; where the RBG granularity of each cell is determined based on three or more candidate RBG granularities corresponding to a number of RBs occupied by a bandwidth part (BWP) configured for each cell, or, determined based on a sum or average of the numbers of RBs occupied by the BWPs configured for the plurality of cells;
an eleventh determination module 804, configured to determine a bit value of a frequency domain resource allocation (FDRA) field in the DCI based on the resource allocation type of each cell, the RBG granularity of each cell, and the frequency domain resource corresponding to each cell; and
a first sending module 805, configured to send the DCI to a terminal.

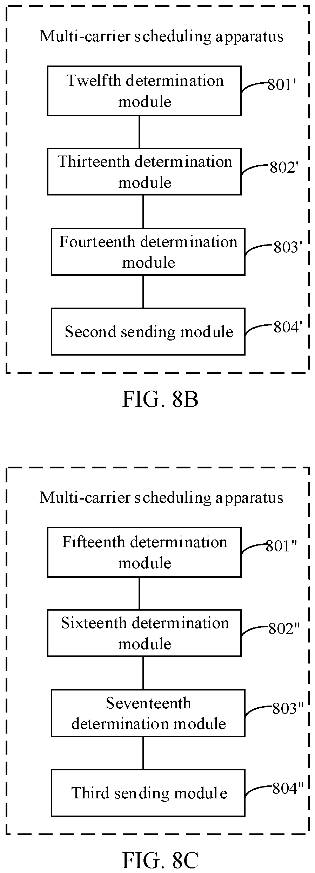

Referring to FIG. 8B, which is a block diagram of a multi-carrier scheduling apparatus according to an exemplary embodiment, the apparatus is applied to a base station and includes:

a twelfth determination module 801', configured to determine a frequency domain resource of each of a plurality of cells that need to be scheduled by downlink control information (DCI); where the DCI is used to schedule data transmission of the plurality of cells;
a thirteenth determination module 802', configured to determine a resource allocation type of data transmission of each cell;
a fourteenth determination module 803', configured to determine a bit value of a frequency domain resource allocation (FDRA) field in the DCI based on the resource allocation type of each cell and the frequency domain resource corresponding to each cell; where the resource allocation types of the plurality of cells are the same; and
a second sending module 804', configured to send the DCI to a terminal.

Referring to FIG. 8C, which is a block diagram of a multi-carrier scheduling apparatus according to an exemplary embodiment, the apparatus is applied to a base station and includes:

a fifteenth determination module 801", configured to determine a frequency domain resource of each of a plurality of cells that need to be scheduled by downlink control information (DCI); where the DCI is used to schedule data transmission of the plurality of cells;
a sixteenth determination module 802", configured to determine a resource allocation type of data transmission of each cell;

a seventeenth determination module 803", configured to determine a bit value of a frequency domain resource allocation (FDRA) field in the DCI based on the resource allocation type of each cell and the frequency domain resource corresponding to each cell; where the FDRA field includes a plurality of bit intervals, and a number of the plurality of bit intervals is equal to a number of resource allocation types; where an *j*-th bit interval is used to indicate: a frequency domain for data transmission of a cell corresponding to an *j*-th resource allocation type, where j is a positive integer less than or equal to the number of resource allocation types; and

a third sending module 804", configured to send the DCI to a terminal.

As for the apparatus embodiments, since they basically correspond to the method embodiments, for relevant details, the partial description of the method embodiments may be referred to. The apparatus embodiments described above are only illustrative. The units described above as separate components may or may not be physically separated. The components shown as units may or may not be physical units, that is, they may be located in a place, or may be distributed to a plurality of network units. Some or all of the modules can be selected according to actual needs to achieve the purpose of the solutions of the present disclosure. Persons of ordinary skill in the art can understand and implement them without any creative effort.

Correspondingly, the present disclosure also provides a computer-readable storage medium that stores a computer program, and the computer program is used to execute any one of the above resource determination methods.

Correspondingly, the present disclosure also provides a computer-readable storage medium that stores a computer program, and the computer program is used to execute any one of the above multi-carrier scheduling methods.

Correspondingly, the present disclosure also provides a resource determination apparatus, including:

a processor; and
a memory used to store instructions executable by the processor;
where the processor is configured to execute any one of the above resource determination methods.

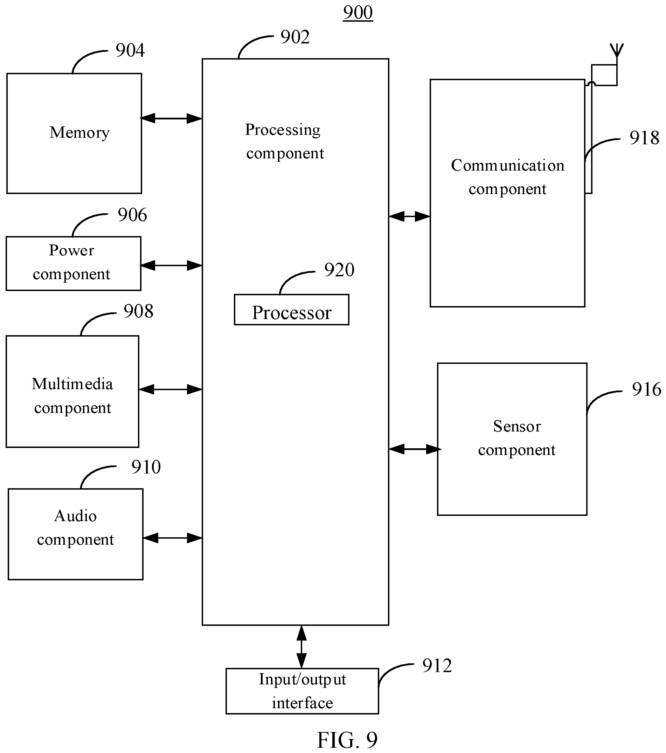

FIG. 9 is a block diagram of a resource determining apparatus 900 according to an exemplary embodiment. For example, the apparatus 900 may be a mobile phone, a tablet, an e-book reader, a multimedia playback device, a wearable device, a vehicle-mounted user equipment, an iPad, a smart TV, and other terminals.

Referring to FIG. 9, the apparatus 900 may include one or more of the following components: a processing component 902, a memory 904, a power component 906, a multimedia component 908, an audio component 910, an input/output (I/O) interface 912, a sensor component 916, and a communication component 918.

The processing component 902 typically controls overall operations of the apparatus 900, such as the operations associated with display, telephone calls, data random access, camera operations, and recording operations. The processing component 902 may include one or more processors 920 to execute instructions to perform all or part of the steps of the above-described resource determination method. Moreover, the processing component 902 may include one or more modules which facilitate the interaction between the processing component 902 and other components. For instance, the processing component 902 may include a multimedia module to facilitate the interaction between the multimedia component 908 and the processing component 902. As another example, the processing component 902 may read executable instructions from the memory to implement the steps of the resource determination method provided by the above embodiments.

The memory 904 is configured to store various types of data to support the operations of the apparatus 900. Examples of such data include instructions for any applications or methods operating on the apparatus 900, contact data, phonebook data, messages, pictures, videos, etc. The memory 904 may be implemented using any type of volatile or non-volatile memory devices, or a combination thereof, such as a static random access memory (SRAM), an electrically erasable programmable read-only memory (EEPROM), an erasable programmable read-only memory (EEPROM), a programmable read-only memory (EPROM), a programmable read-only memory (PROM), a read-only memory (ROM), a magnetic memory, a flash memory, a magnetic or optical disk.

The power supply component 906 provides power to various components of the apparatus 900. The power supply component 906 may include a power management system, one or more power sources, and other components associated with the generation, management, and distribution of power in the apparatus 900.

The multimedia component 908 includes a display screen providing an output interface between the apparatus 900 and the user. In some embodiments, multimedia component 908 includes a front camera and/or a rear camera. The front camera and/or the rear camera may receive an external multimedia datum while the apparatus 900 is in an operation mode, such as a shooting mode or a video mode. Each of the front camera and the rear camera may be a fixed optical lens system or have focus and optical zoom capability.

The audio component 910 is configured to output and/or input audio signals. For example, the audio component 910 includes a microphone (MIC) configured to receive an external audio signal when the apparatus 900 is in an operation mode, such as a call mode, a recording mode, and a voice recognition mode. The received audio signal may be further stored in the memory 904 or transmitted via the communication component 918. In some embodiments, the audio component 910 further includes a speaker to output audio signals.

The I/O interface 912 provides an interface between the processing component 902 and peripheral interface modules, such as a keyboard, a click wheel, buttons, and the like. The buttons may include, but are not limited to, a home button, a volume button, a starting button, and a locking button.

The sensor component 916 includes one or more sensors to provide status assessments of various aspects of the apparatus 900. For instance, the sensor component 916 may detect an open/closed status of the apparatus 900, relative positioning of components, e.g., the display and the keypad, of the apparatus 900, a change in position of the apparatus 900 or a component of the apparatus 900, a presence or absence of user contact with the apparatus 900, an orientation or acceleration/deceleration of the apparatus 900, and a change in temperature of the apparatus 900. The sensor assembly 916 may include a proximity sensor configured to detect the presence of nearby objects without any physical contact. The sensor assembly 916 may also include a light sensor, such as a CMOS or CCD image sensor, for use in imaging applications. In some embodiments, the sensor component 916 may also include an acceleration sensor, a gyroscope sensor, a magnetic sensor, a pressure sensor, or a temperature sensor.

The communication component 918 is configured to facilitate communication, wired or wirelessly, between the apparatus 900 and other devices. The apparatus 900 can access a wireless network based on a communication standard, such as Wi-Fi, 2G, 3G, 4G, 5G or 6G, or a combination thereof. In one exemplary embodiment, the communication component 918 receives a broadcast signal or broadcast associated information from an external broadcast management system via a broadcast channel. In one exemplary embodiment, the communication component 918 further includes a near field communications (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 900 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing any one of the above resource determination methods on the terminal side.

In exemplary embodiments, there is also provided a non-transitory machine-readable storage medium including instructions, such as a memory 904 including instructions, which can be executed by the processor 920 of the apparatus 900 to complete the above resource determination method. For example, the non-transitory computer-readable storage medium may be a ROM, a random access memory (RAM), a CD-ROM, a magnetic tape, a floppy disc, an optical data storage device, and the like.

Correspondingly, the present disclosure also provides a multi-carrier scheduling apparatus, including:

a processor; and
a memory used to store instructions executable by the processor;
where the processor is configured to execute any one of the above multi-carrier scheduling methods.

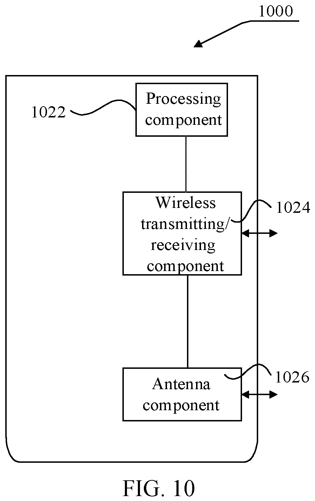

As shown in FIG. 10, FIG. 10 is a schematic structural diagram of a multi-carrier scheduling apparatus 1000 according to an exemplary embodiment. The apparatus 1000 may be provided as a base station. Referring to FIG. 10, the apparatus 1000 includes a processing component 1022, a wireless transmitting/receiving component 1024, an antenna component 1026, and a wireless interface-specific signal processing portion. The processing component 1022 may further include at least one processor.

One of the processors in the processing component 1022 may be configured to perform any of the above-described multi-carrier scheduling methods.

Other embodiments of the disclosure will be readily apparent to those skilled in the art from consideration of the specification and practice of the contents disclosed herein. The present disclosure is intended to cover any variations, uses, or adaptations of the present disclosure, which follows the general principles thereof and includes the common knowledge or customary technical means in the technical field that are not disclosed in the present disclosure. It is intended that the specification and embodiments be considered as exemplary only, with a true scope and spirit of the present disclosure being indicated by the appending claims.

It is to be understood that the present disclosure is not limited to the precise structures described above and illustrated in the accompanying drawings, and various modifications and changes may be made without departing from the scope thereof. The scope of the present disclosure is limited only by the appended claims.

**Claims**

1. A resource determination method, wherein the method is executed by a terminal and comprises:

   receiving downlink control information (DCI) sent by a base station; wherein the DCI is used to schedule data transmission of a plurality of cells;
   determining a resource allocation type of a first cell; wherein the first cell is any one of the plurality of cells;
   determining a resource block group (RBG) granularity of the first cell; wherein the RBG granularity of the first cell is determined based on three or more candidate RBG granularities corresponding to a number of RBs occupied by a bandwidth part (BWP) configured for the first cell, or, determined based on a sum or average of the numbers of RBs occupied by BWPs configured for the plurality of cells; and
   determining a frequency domain resource for data transmission of the first cell based on the RBG granularity of the first cell, the resource allocation type of the first cell, and an indication value of a frequency domain resource allocation (FDRA) field in the DCI.

2. The method according to claim 1, wherein the RBG granularity of the first cell is determined based on a first corresponding relationship among a first RB number range, candidate configuration identifiers, and the candidate RBG granularities; wherein the first RB number range is an RB number range to which the number of RBs occupied by the bandwidth part (BWP) configured for the first cell belongs;
   in the first corresponding relationship, the first RB number range corresponds to three or more candidate configuration identifiers, and each of the candidate configuration identifiers corresponds to one of the candidate RBG granularities.

3. The method according to claim 1, wherein the RBG granularities of the plurality of cells are the same, and the RBG granularities of the plurality of cells are determined based on a second corresponding relationship among a second RB number range, candidate configuration identifiers, and the candidate RBG granularities; wherein the second RB number range is an RB number range to which the sum or average of the numbers of RBs occupied by the BWPs configured for the plurality of cells belongs.

4. The method according to claim 3, wherein in the second corresponding relationship, the second RB number range corresponds to two or more candidate configuration identifiers, and each of the candidate configuration identifiers is used to determine one of the candidate RBG granularities.

5. A resource determination method, wherein the method is executed by a terminal and comprises:

   receiving downlink control information (DCI) sent by a base station; wherein the DCI is used to schedule data transmission of a plurality of cells;
   determining a resource allocation type of a first cell; wherein the first cell is any one of the plurality of cells; and
   determining a frequency domain resource for data transmission of the first cell based on the resource allocation type of the first cell and an indication value of a frequency domain resource allocation (FDRA) field in the DCI;
   wherein resource allocation types of the plurality of cells are the same.

6. The method according to claim 5, wherein the resource allocation types of the plurality of cells are a first type, and RBG indexes of data transmission of the plurality of cells are determined based on a first reference cell; wherein the first type indicates a frequency domain resource for data transmission of the cell through a bitmap, and the first reference cell is a cell different from the first cell among the plurality of cells;
   the FDRA field is used to indicate:
   an RBG index of data transmission of the first reference cell.

7. The method according to claim 5, wherein the DCI comprises a plurality of FDRA fields, and a number of the plurality of FDRA fields is equal to a number of cells in the plurality of cells;
   in a case that the resource allocation types of the plurality of cells are a first type, an i-th FDRA field is used to indicate:
   an RBG index of data transmission of an i-th scheduled cell among the plurality of cells, wherein i is a positive integer less than or equal to the number of cells; wherein the first type indicates a frequency domain resource for data transmission of the cell through a bitmap.

8. The method according to claim 7, wherein a designated bit in each of the FDRA fields is used to indicate a set to which an available RBG index value of data transmission of the cell belongs.

9. The method according to claim 8, wherein in a case that a most significant bit (MSB) is not occupied, the designated bit is the MSB;
in a case that the MSB is occupied, the designated bit is any of:

one bit located after the MSB and adjacent to the MSB;
a least significant bit (LSB).

10. A resource determination method, wherein the method is executed by a terminal and comprises:

receiving downlink control information (DCI) sent by a base station; wherein the DCI is used to schedule data transmission of a plurality of cells;
determining a resource allocation type of a first cell; wherein the first cell is any one of the plurality of cells; and
determining a frequency domain resource for data transmission of the first cell based on the resource allocation type of the first cell and an indication value of a frequency domain resource allocation (FDRA) field in the DCI;
wherein the FDRA field comprises a plurality of bit intervals, and a number of the plurality of bit intervals is equal to a number of resource allocation types;
wherein an $j$-th bit interval is used to indicate:
a frequency domain resource for data transmission of a cell corresponding to an j-th resource allocation type, wherein j is a positive integer less than or equal to the number of the resource allocation types.

11. The method according to claim 10, wherein determining the frequency domain resource for data transmission of the first cell based on the resource allocation type of the first cell and the indication value of the frequency domain resource allocation (FDRA) field in the DCI, comprises:

determining a first bit interval corresponding to the first cell based on the resource allocation type of the first cell; and
determining the frequency domain resource for data transmission of the first cell based on an indication value of the first bit interval.

12. The method according to claim 11, wherein the first bit interval is further used to indicate a frequency domain resource for data transmission of a second reference cell, and the frequency domain resource for data transmission of the first cell is determined based on the second reference cell; wherein the second reference cell is a cell different from the first cell among cells whose resource allocation types are the same as the resource allocation type corresponding to the first bit interval.

13. A multi-carrier scheduling method, wherein the method is executed by a base station and comprises:

determining a frequency domain resource of each of a plurality of cells that need to be scheduled by downlink control information (DCI); wherein the DCI is used to schedule data transmission of the plurality of cells;
determining a resource allocation type of data transmission of each of the plurality of cells;
determining a resource block group (RBG) granularity of each of the plurality of cells; wherein the RBG granularity of each of the plurality of cells is determined based on three or more candidate RBG granularities corresponding to a number of RBs occupied by a bandwidth part (BWP) configured for each of the plurality of cells, or, determined based on a sum or average of the numbers of RBs occupied by BWPs configured for the plurality of cells;
determining a bit value of a frequency domain resource allocation (FDRA) field in the DCI based on the resource allocation type of each of the plurality of cells, the RBG granularity of each of the plurality of cells, and the frequency domain resource corresponding to each of the plurality of cells; and
sending the DCI to a terminal.

14. The method according to claim 13, wherein the RBG granularity of a first cell is determined based on a first corresponding relationship among a first RB number range, candidate configuration identifiers, and the candidate RBG granularities; wherein the first cell is any one of the plurality of cells, and the first RB number range is an RB number range to which a number of RBs occupied by a bandwidth part (BWP) configured for the first cell belongs; in the first corresponding relationship, the first RB number range corresponds to three or more candidate configuration identifiers, and each of the candidate configuration identifiers corresponds to one of the candidate RBG granularities.

15. The method according to claim 13, wherein the RBG granularities of the plurality of cells are the same, and the RBG granularities of the plurality of cells are determined based on a second corresponding relationship among a second RB number range, candidate configuration identifiers, and the candidate RBG granularities; wherein the second RB number range is an RB number range to which the sum or average of the numbers of RBs occupied by the BWPs configured for the plurality of cells belongs.

16. The method according to claim 15, wherein in the second corresponding relationship, the second RB number range corresponds to two or more candidate configuration identifiers, and each of the candidate configuration identifiers is used to determine one of the candidate RBG granularities.

17. A multi-carrier scheduling method, wherein the method is executed by a base station and comprises:

determining a frequency domain resource of each of a plurality of cells that need to be scheduled by downlink control information (DCI); wherein the DCI is used to schedule data transmission of the plurality of cells; determining a resource allocation type for data transmission of each of the plurality of cells; determining a bit value of a frequency domain resource allocation (FDRA) field in the DCI based on the resource allocation type of each of the plurality of cells and the frequency domain resource corresponding to each of the plurality of cells; wherein resource allocation types of the plurality of cells are the same; and sending the DCI to a terminal.

18. The method according to claim 17, wherein the resource allocation types of the plurality of cells are a first type, and RBG indexes of data transmission of the plurality of cells are determined based on a first reference cell; wherein the first type indicates a frequency domain resource for data transmission of the cell through a bitmap, and the first reference cell is a cell different from the first cell among the plurality of cells; the FDRA field is used to indicate: an RBG index of data transmission of the first reference cell.

19. The method according to claim 17, wherein the DCI comprises a plurality of FDRA fields, and a number of the plurality of FDRA fields is equal to a number of cells in the plurality of cells; wherein an i-th FDRA field is used to indicate: an RBG index of data transmission of an i-th scheduled cell among the plurality of cells, wherein i is a positive integer less than or equal to the number of cells.

20. The method according to claim 19, wherein in a case that the resource allocation types of the plurality of cells are a first type, a designated bit in each of the FDRA fields is used to indicate a set to which an available RBG index value of data transmission of the cell belongs; wherein the first type indicates the frequency domain resource for data transmission of the cell through a bitmap.

21. The method according to claim 20, wherein in a case that a most significant bit (MSB) is not occupied, the designated bit is the MSB;

in a case that the MSB is occupied, the designated bit is any of: one bit located after the MSB and adjacent to the MSB; a least significant bit (LSB).

22. A multi-carrier scheduling method, wherein the method is executed by a base station and comprises:

determining a frequency domain resource of each of a plurality of cells that need to be scheduled by downlink control information (DCI); wherein the DCI is used to schedule data transmission of the plurality of cells; determining a resource allocation type for data transmission of each of the plurality of cells; determining a bit value of a frequency domain resource allocation (FDRA) field in the DCI based on the resource allocation type of each of the plurality of cells and the frequency domain resource corresponding to each of the plurality of cells; wherein the FDRA field comprises a plurality of bit intervals, and a number of the plurality of bit intervals is equal to a number of resource allocation types; wherein an $j$-th bit interval is used to indicate: a frequency domain resource for data transmission of a cell corresponding to an $j$-th resource allocation type, wherein j is a positive integer less than or equal to the number of the resource allocation types; and sending the DCI to a terminal.

23. The method according to claim 22, wherein determining the bit value of the frequency domain resource allocation (FDRA) field in the DCI based on the resource allocation type of each of the plurality of cells and the frequency domain resource corresponding to each of the plurality of cells, comprises:

determining a first bit interval corresponding to a first cell based on a resource allocation type of the first cell; wherein the first cell is any one of the plurality of cells; and
determining a bit value of the first bit interval based on a frequency domain resource for data transmission of the first cell.

24. The method according to claim 23, wherein the first bit interval is further used to indicate a frequency domain resource for data transmission of a second reference cell, and the frequency domain resource for data transmission of the first cell is determined based on the reference cell; wherein the second reference cell is a cell different from the first cell among cells whose resource allocation types are the same as the resource allocation type corresponding to the first bit interval.

25. A resource determination apparatus, wherein the apparatus is applied to a terminal and comprises:

a first receiving module, configured to receive downlink control information (DCI) sent by a base station; wherein the DCI is used to schedule data transmission of a plurality of cells;
a first determination module, configured to determine a resource allocation type of a first cell; wherein the first cell is any one of the plurality of cells;
a second determination module, configured to determine a resource block group (RBG) granularity of the first cell; wherein the RBG granularity of the first cell is determined based on three or more candidate RBG granularities corresponding to a number of RBs occupied by a bandwidth part (BWP) configured for the first cell, or, determined based on a sum or average of the numbers of RBs occupied by BWPs configured for the plurality of cells; and
a third determination module, configured to determine a frequency domain resource for data transmission of the first cell based on the resource allocation type of the first cell, the RBG granularity of the first cell, and an indication value of a frequency domain resource allocation (FDRA) field in the DCI.

26. A resource determination apparatus, wherein the apparatus is applied to a terminal and comprises:

a second receiving module, configured to receive downlink control information (DCI) sent by a base station; wherein the DCI is used to schedule data transmission of a plurality of cells;
a fourth determination module, configured to determine a resource allocation type of a first cell; wherein the first cell is any one of the plurality of cells; and
a fifth determination module, configured to determine a frequency domain resource for data transmission of the first cell based on the resource allocation type of the first cell and an indication value of a frequency domain resource allocation (FDRA) field in the DCI; wherein the resource allocation types of the plurality of cells are the same.

27. A resource determination apparatus, wherein the apparatus is applied to a terminal and comprises:

a third receiving module, configured to receive downlink control information (DCI) sent by a base station; wherein the DCI is used to schedule data transmission of a plurality of cells;
a sixth determination module, configured to determine a resource allocation type of a first cell; wherein the first cell is any one of the plurality of cells; and
a seventh determination module, configured to determine a frequency domain resource for data transmission of the first cell based on the resource allocation type of the first cell and an indication value of a frequency domain resource allocation (FDRA) field in the DCI; wherein the FDRA field comprises a plurality of bit intervals, and a number of the plurality of bit intervals is equal to a number of resource allocation types;
wherein an $j$-th bit interval is used to indicate:
a frequency domain resource for data transmission of a cell corresponding to an $j$-th resource allocation type, wherein $j$ is a positive integer less than or equal to the number of the resource allocation types.

28. A multi-carrier scheduling apparatus, wherein the apparatus is applied to a base station and comprises:

an eighth determination module, configured to determine a frequency domain resource of each of a plurality of cells that need to be scheduled by downlink control information (DCI); wherein the DCI is used to schedule data transmission of the plurality of cells;
a ninth determination module, configured to determine a resource allocation type for data transmission of each of the plurality of cells;
a tenth determination module, configured to determine a resource block group (RBG) granularity of each of the plurality of cells; wherein the RBG granularity of each of the plurality of cells is determined based on three or more candidate RBG granularities corresponding to a number of RBs occupied by a bandwidth part (BWP) configured for each of the plurality of cells, or determined based on a sum or average of the numbers of RBs occupied by BWPs configured for the plurality of cells;
an eleventh determination module, configured to determine a bit value of a frequency domain resource allocation (FDRA) field in the DCI based on the resource allocation type of each of the plurality of cells, the RBG granularity of each of the plurality of cells, and the frequency domain resource corresponding to each of the plurality of cells; and
a first sending module, configured to send the DCI to a terminal.

29. A multi-carrier scheduling apparatus, wherein the apparatus is applied to a base station and comprises:

a twelfth determination module, configured to determine a frequency domain resource of each of a plurality of cells that need to be scheduled by downlink control information (DCI); wherein the DCI is used to schedule data transmission of the plurality of cells;
a thirteenth determination module, configured to determine a resource allocation type for data transmission of each of the plurality of cells;
a fourteenth determination module, configured to determine a bit value of a frequency domain resource allocation (FDRA) field in the DCI based on the resource allocation type of each of the plurality of cells and the frequency domain resources corresponding to each of the plurality of cells; wherein the resource allocation types of the plurality of cells are the same; and
a second sending module, configured to send the DCI to a terminal.

30. A multi-carrier scheduling apparatus, wherein the apparatus is applied to a base station and comprises:

a fifteenth determination module, configured to determine a frequency domain resource of each of the plurality of cells that need to be scheduled by downlink control information (DCI); wherein the DCI is used to schedule data transmission of the plurality of cells;
a sixteenth determination module, configured to determine a resource allocation type for data transmission of each of the plurality of cells;
a seventeenth determination module, configured to determine a bit value of a frequency domain resource allocation (FDRA) field in the DCI based on the resource allocation type of each of the plurality of cells and the frequency domain resource corresponding to each of the plurality of cells; wherein the FDRA field comprises a plurality of bit intervals, and a number of the plurality of bit intervals is equal to a number of resource allocation types; wherein an $j$-th bit interval is used to indicate: a frequency domain resource for data transmission of a cell corresponding to an $j$-th resource allocation type, wherein j is a positive integer less than or equal to the number of the resource allocation types; and
a third sending module, configured to send the DCI to a terminal.

31. A computer-readable storage medium, wherein the storage medium stores a computer program, and the computer program is used to execute the resource determination method according to any one of claims 1-12.

32. A computer-readable storage medium, wherein the storage medium stores a computer program, and the computer program is used to execute the multi-carrier scheduling method according to any one of claims 13-24.

33. A resource determination apparatus comprising:

a processor; and
a memory configured to store instructions executable by the processor;
wherein the processor is configured to execute the resource determination method according to any one of claims 1-12.

34. A multi-carrier scheduling apparatus, comprising:

a processor; and
a memory configured to store instructions executable by the processor;
wherein the processor is configured to execute the multi-carrier scheduling method according to any one of claims

13-24.

Cell 0          Cell 1          Cell 2

DCI          PDSCH          PDSCH          PDSCH

FIG. 1A

| 1 | 0 | 0 | 1 | 0 | 1 | 1 |
|---|---|---|---|---|---|---|

Type0 bitmap

RBG#0   RBG#1   RBG#2   RBG#3   RBG#4   RBG#5   RBG#6

FIG. 1B

Type1

RB#0       RB#7       RB#15       RB#24

FIG. 1C

Receive downlink control information (DCI), which is sent by means of a base station, wherein the DCI is used for scheduling data transmission of a plurality of cells    201

Determine a resource allocation type of a first cell    202

Determine a frequency-domain resource for data transmission of the first cell at least on the basis of the resource allocation type of the first cell and a frequency-domain resource allocation (FDRA) domain indication value in the DCI    203

FIG. 2

Receive downlink control information (DCI) sent by a base station; where the DCI is used to schedule data transmission of a plurality of cells — 301

Determine a resource allocation type of the first cell — 302

Determine a resource block group (RBG) granularity of the first cell — 303

Determine a frequency domain resource for data transmission of the first cell based on the RBG granularity of the first cell, the resource allocation type of the first cell, and an indication value of the FDRA field — 304

FIG. 3

Determine a frequency domain resource of each of a plurality of cells that need to be scheduled by downlink control information (DCI); where the DCI is used to schedule data transmission of the plurality of cells — 401

Determine a resource allocation type of data transmission of each cell — 402

Determine a bit value of a frequency domain resource allocation (FDRA) field in the DCI based on at least the resource allocation type of each cell and the frequency domain resource corresponding to each cell — 403

Send the DCI to a terminal — 404

FIG. 4

Determine a frequency domain resource of each of a plurality of cells that need to be scheduled by downlink control information (DCI); where the DCI is used to schedule data transmission of the plurality of cells — 501

Determine a resource allocation type for data transmission of each cell — 502

Determine a resource block group (RBG) granularity of each cell — 503

Determine a bit value of the FDRA field based on the resource allocation type of each cell, the RBG granularity of each cell, and the frequency domain resource corresponding to each cell — 504

Send the DCI to a terminal — 505

FIG. 5

| | type 0 | type 1 | dynamic | dynamic |
|---|---|---|---|---|
| FDRA | bit interval 0 | bit interval 1 | bit interval 2 | bit interval 2 |
| | cell 1 | cell 0  cell 4 | cell 2 | cell 3 |

FIG. 6

Resource determination apparatus

Receiving module — 701

First determination module — 702

Second determination module — 703

Third determination module — 704

FIG. 7A

Resource determination apparatus

Second receiving module — 701'

Fourth determination module — 702'

Fifth determination module — 703'

FIG. 7B

Resource determination apparatus

Third receiving module ⌐701"

Sixth determination module ⌐702"

Seventh determination module ⌐703"

FIG. 7C

Multi-carrier scheduling apparatus

Eighth determination module ⌐801

Ninth determination module ⌐802

Tenth determination module ⌐803

Eleventh determination module ⌐804

First sending module ⌐805

FIG. 8A

FIG. 8B

FIG. 8C

<u>900</u>

FIG. 9

1000

Processing
component

1022

Wireless
transmitting/
receiving
component

1024

Antenna
component

1026

FIG. 10

## INTERNATIONAL SEARCH REPORT

| | International application No. |
|---|---|
| | **PCT/CN2022/103204** |

**A. CLASSIFICATION OF SUBJECT MATTER**

H04W 72/04(2009.01)i; H04W 72/12(2009.01)i; H04L 5/00(2006.01)i

According to International Patent Classification (IPC) or to both national classification and IPC

**B. FIELDS SEARCHED**

Minimum documentation searched (classification system followed by classification symbols)

H04W; H04L; H04B

Documentation searched other than minimum documentation to the extent that such documents are included in the fields searched

Electronic data base consulted during the international search (name of data base and, where practicable, search terms used)

CNTXT; VEN; USTXT; WOTXT; EPTXT; CNKI; 3GPP: 小区, 资源分配, 下行控制信息, 类型, 资源块组, cell, resource allocation, DCI, type, RBG, FDRA

**C. DOCUMENTS CONSIDERED TO BE RELEVANT**

| Category* | Citation of document, with indication, where appropriate, of the relevant passages | Relevant to claim No. |
|---|---|---|
| X | WO 2021223703 A1 (VIVO MOBILE COMMUNICATION CO., LTD.) 11 November 2021 (2021-11-11)<br>description, page 7 line 1-page 28 line 19, and figures 1-10 | 1-9, 13-21, 25, 26, 28, 29, 31-34 |
| A | US 2020267511 A1 (HUAWEI TECHNOLOGIES CO., LTD.) 20 August 2020 (2020-08-20)<br>entire document | 1-34 |
| A | WO 2020194464 A1 (NTT DOCOMO INC.) 01 October 2020 (2020-10-01)<br>entire document | 1-34 |
| A | US 2021321400 A1 (QUALCOMM INC.) 14 October 2021 (2021-10-14)<br>entire document | 1-34 |
| A | WO 2022081996 A1 (OFINNO LLC.) 21 April 2022 (2022-04-21)<br>entire document | 1-34 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 October 2022** | **28 October 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

| INTERNATIONAL SEARCH REPORT | | International application No. |
|:---:|:---:|:---:|
| Information on patent family members | | PCT/CN2022/103204 |

| Patent document cited in search report | | | Publication date (day/month/year) | Patent family member(s) | | | Publication date (day/month/year) |
|---|---|---|---|---|---|---|---|
| WO | 2021223703 | A1 | 11 November 2021 | | None | | |
| US | 2020267511 | A1 | 20 August 2020 | WO | 2020164404 | A1 | 20 August 2020 |
| | | | | EP | 3918857 | A1 | 08 December 2021 |
| | | | | CN | 113439470 | A | 24 September 2021 |
| | | | | US | 2021314738 | A1 | 07 October 2021 |
| WO | 2020194464 | A1 | 01 October 2020 | | None | | |
| US | 2021321400 | A1 | 14 October 2021 | WO | 2021207416 | A1 | 14 October 2021 |
| WO | 2022081996 | A1 | 21 April 2022 | | None | | |

Form PCT/ISA/210 (patent family annex) (January 2015)